(19) Europäisches Patentamt
European Patent Office
Office européen des brevets

(11) **EP 4 742 585 A1**

(12) **EUROPEAN PATENT APPLICATION**
published in accordance with Art. 153(4) EPC

(43) Date of publication:
**13.05.2026 Bulletin 2026/20**

(21) Application number: **23944047.2**

(22) Date of filing: **05.07.2023**

(51) International Patent Classification (IPC):
**H04L 9/08** (2006.01)

(52) Cooperative Patent Classification (CPC):
**H04L 9/08**

(86) International application number:
**PCT/CN2023/105969**

(87) International publication number:
**WO 2025/007316 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Meng**
  **Dongguan, Guangdong 523860 (CN)**
• **GAN, Lu**
  **Dongguan, Guangdong 523860 (CN)**
• **XIONG, Lihui**
  **Dongguan, Guangdong 523860 (CN)**

(74) Representative: **RGTH
Patentanwälte PartGmbB
Mönckebergstraße 11
20095 Hamburg (DE)**

(54) **KEY GENERATION METHOD, AND DEVICE**

(57) The present application relates to a key generation method, a device, a computer readable storage medium, a computer program product, and a computer program. The method comprises: a first device receives a first pilot signal sent by a second device; the first device calculates a channel estimation value on the basis of a first pilot key and the first pilot signal; the first device generates a first key on the basis of a plurality of first quantization sequences; the first device sends a plurality of response signals to the second device on the basis of the channel estimation value and the plurality of first quantization sequences, wherein the plurality of response signals are used for the second device to generate a second key.

```
┌──────────────────────────────────────────────────────────────────────┐   ⌐ S210
│ A first device receives a first pilot signal transmitted by a second device │
└──────────────────────────────────────────────────────────────────────┘
                                    │
                                    ▼
┌──────────────────────────────────────────────────────────────────────┐   ⌐ S220
│ The first device calculates a channel estimation value based on a first pilot key and the first pilot │
│                               signal                                    │
└──────────────────────────────────────────────────────────────────────┘
                                    │
                                    ▼
┌──────────────────────────────────────────────────────────────────────┐   ⌐ S230
│ The first device generates a first key based on multiple first quantization sequences │
└──────────────────────────────────────────────────────────────────────┘
                                    │
                                    ▼
┌──────────────────────────────────────────────────────────────────────┐   ⌐ S240
│ The first device transmits multiple response signals to the second device based on the channel │
│ estimation value and the multiple first quantization sequences, where the multiple response signals are │
│              used for the second device to generate a second key        │
└──────────────────────────────────────────────────────────────────────┘
```

FIG. 2

## Description

TECHNICAL FIELD

The present application relates to the field of communications, and more specifically, to key generation methods, devices, a computer-readable storage medium, a computer program product, and a computer program.

BACKGROUND

With the development of communication technologies, contactless automatic identification technology has emerged. This technology typically enables contactless data transmission between a zero-power terminal and other devices by means of wireless radio frequency. A communication channel between the zero-power terminal and a reader is an insecure channel. Therefore, in order to ensure security of data transmission for the zero-power terminal, a solution has been further proposed in which the zero-power terminal uses a key for communication. However, how to enable the zero-power terminal to generate the key in a less complex manner while ensuring security of the key remains a problem that needs to be solved.

SUMMARY

Embodiments of the present application provide key generation methods, devices, a computer-readable storage medium, a computer program product, and a computer program.

Embodiments of the present application provide a key generation method, and the key generation method includes:

receiving, by a first device, a first pilot signal transmitted by a second device;
calculating, by the first device, a channel estimation value based on a first pilot key and the first pilot signal;
generating, by the first device, a first key based on multiple first quantization sequences; and
transmitting, by the first device, multiple response signals to the second device based on the channel estimation value and the multiple first quantization sequences, where the multiple response signals are used for the second device to generate a second key.

Embodiments of the present application provide a key generation method, and the key generation method includes:

calculating, by a second device, a first pilot signal based on a first pilot key;
transmitting, by the second device, the first pilot signal to a first device;

receiving, by the second device, multiple response signals from the first device; and
generating, by the second device, a second key based on the multiple response signals.

Embodiments of the present application provide a key generation method, and the key generation method includes:
transmitting, by a first network device, a first pilot key to a first device, where the first pilot key is used for the first device to calculate a channel estimation value and transmit multiple response signals to a second device based on the channel estimation value, and the multiple response signals are used for the second device to generate a second key.

Embodiments of the present application provide a first device, and the first device includes:

a first communication unit configured to receive a first pilot signal transmitted by a second device; and transmit multiple response signals to the second device based on a channel estimation value and multiple first quantization sequences, where the multiple response signals are used for the second device to generate a second key; and
a first processing unit configured to calculate the channel estimation value based on a first pilot key and the first pilot signal; and generate a first key based on the multiple first quantization sequences.

Embodiments of the present application provide a second device, and the second device includes:

a second processing unit configured to calculate a first pilot signal based on a first pilot key; and generate a second key based on multiple response signals; and
a second communication unit configured to transmit the first pilot signal to a first device and receive multiple response signals from the first device.

Embodiments of the present application provide a first network device, and the first network device includes:
a third communication unit configured to transmit a first pilot key to a first device, where the first pilot key is used for the first device to calculate a channel estimation value and transmit multiple response signals to a second device based on the channel estimation value, and the multiple response signals are used for the second device to generate a second key.

Embodiments of the present application provide a first device, and the first device includes a processor and a memory in communication with the processor. The memory is configured to store instructions. The instructions, when executed by the processor, cause the first device to perform the above method.

Embodiments of the present application provide a second device, and the second device includes a processor and a memory in communication with the processor. The memory is configured to store instructions. The instructions, when executed by the processor, cause the second device to perform the above method.

Embodiments of the present application provide a first network device, and the first network device includes a processor and a memory in communication with the processor. The memory is configured to store instructions. The instructions, when executed by the processor, cause the first network device to perform the above method.

Embodiments of the present application provide a chip for implementing the above method.

Specifically, the chip includes a processor. The processor is configured to call a computer program from a memory and run the computer program to cause a device equipped with the chip to perform the above method.

Embodiments of the present application provide a computer-readable storage medium for storing a computer program. The computer program, when executed by a device, causes the device to perform the above method.

Embodiments of the present application provide a computer program product including computer program instructions. The computer program instructions cause a computer to perform the above method.

Embodiments of the present application provide a computer program. The computer program, when executed on a computer, causes the computer to perform the above method.

By employing the solution provided in the embodiments, the first device side can perform channel estimation based on the pilot key and the first pilot signal after receiving the first pilot signal from the second device, select quantization sequences to generate its own first key, and then transmit response signals to the second device in combination with the channel estimation value and the quantization sequences. As a result, the second device obtains the second key based on the response signals. In this way, the first device performs the channel estimation based on the pilot key, which can avoid a problem of low security caused by the use of a common pilot for channel estimation and subsequent pairwise key negotiation, and improve security of the keys generated by the first device and the second device. In addition, only the first device needs to perform complex calculations such as the channel estimation, which can reduce processing complexity at the second device side and is more suitable for the second device with lower capabilities.

BRIEF DESCRIPTION OF THE DRAWINGS

FIG. 1 is a schematic diagram of an application scenario according to an embodiment of the present application.
FIG. 2 is a schematic flowchart of a key generation method according to an embodiment of the present application.
FIG. 3 is a schematic flowchart of a key generation method according to another embodiment of the present application.
FIG. 4 is a schematic flowchart of a key generation method according to yet another embodiment of the present application.
FIG. 5 is a schematic diagram of a scenario of a system composition architecture including only a first device and a second device.
FIG. 6 is a schematic flowchart of a key generation method according to an embodiment of the present application.
FIG. 7 is a schematic diagram of quantization region indices according to an embodiment of the present application.
FIG. 8 is a schematic flowchart of a key generation method according to an embodiment of the present application.
FIG. 9 is a schematic diagram of quantization intervals according to an embodiment of the present application.
FIGS. 10 to 13 are other four schematic flow charts of a key generation method according to an embodiment of the present application.
FIGS. 14 to 17 are schematic diagrams of four ambient-power-enabled internet of things (AIoT) topology structures of a key generation method according to an embodiment of the present application.
FIG. 18 is a schematic diagram of a bidirectional communication between an AIoT device and a terminal according to a key generation method according to an embodiment of the present application.
FIG. 19 is a schematic block diagram of a first device according to an embodiment of the present application.
FIG. 20 is a schematic block diagram of a second device according to an embodiment of the present application.
FIG. 21 is a schematic block diagram of a first network device according to an embodiment of the present application.
FIG. 22 is a schematic block diagram of a communication device according to an embodiment of the present application.
FIG. 23 is a schematic block diagram of a chip according to an embodiment of the present application.
FIG. 24 is a schematic block diagram of a communication system according to an embodiment of the present application.

DETAILED DESCRIPTION

Technical solutions of embodiments of the present application can be applied to various communication systems, such as a long term evolution (LTE) system, an advanced long term evolution (LTE-A) system, a new radio (NR) system, an evolution system of an NR system, a wireless local area network (WLAN), wireless fidelity (WiFi), or other communication systems.

The embodiments of the present application describe various embodiments in conjunction with a first network device and terminals. The terminal may be mobile or fixed, and may also be referred to as a mobile station, a user unit, etc. The terminal can be a station in a WLAN, or can be a smart terminal, a wireless modem, a laptop, a tablet computer, or other terminals. In the embodiments of the present application, the terminal may be a VR terminal/AR terminal, a terminal in industrial control, a terminal in self driving, a terminal in remote medical, a terminal in smart grid, a terminal in transportation safety, a terminal in smart city, a wireless terminal in smart home, or the like. By way of example and not limitation, in the embodiments of the present application, the terminal may also be a wearable device.

In the embodiments of the present application, the first network device may be a device for communicating with the terminal. The first network device may be an access point in the WLAN; an evolved base station in the LTE; a relay station; a first network device (gNB) in a vehicle-mounted device, a wearable device, and the NR network; a first network device in a future evolved PLMN network; a first network device in a non-terrestrial network; or the like. By way of example and not limitation, in the embodiments of the present application, the first network device may have a mobility feature. For example, the first network device may be a mobile device.

It should be understood that the terms "system" and "network" are often used interchangeably herein. The term "and/or" herein is merely a description of an association relationship between associated objects, indicating that three relationships may exist. For example, A and/or B can mean: A exists alone, both A and B exist, and B exists alone. In addition, the character "/" therein generally indicates that the previous and next related objects are in an "or" relationship. It should be understood that the "indication" mentioned in the embodiments of the present application may be a direct indication, an indirect indication, or an indication of an association relationship. For example, A indicates B, which can mean that A directly indicates B, for example, B can be obtained through A; it can also mean that A indirectly indicates B, for example, A indicates C, and B can be obtained through C; it can also mean that there is an association relationship between A and B. In the description of the embodiments of the present application, the term "corresponding" may indicate a direct or indirect correspondence between the two, an association relationship between the two, or a relationship between indication and being indicated, configuration and being configured, etc.

To facilitate understanding of the technical solutions of the embodiments of the present application, the related art of the embodiments of the present application are described below. The following related art as optional solutions can be arbitrarily combined with the technical solutions of the embodiments of the present application, and they all fall within the protection scope of the embodiments of the present application.

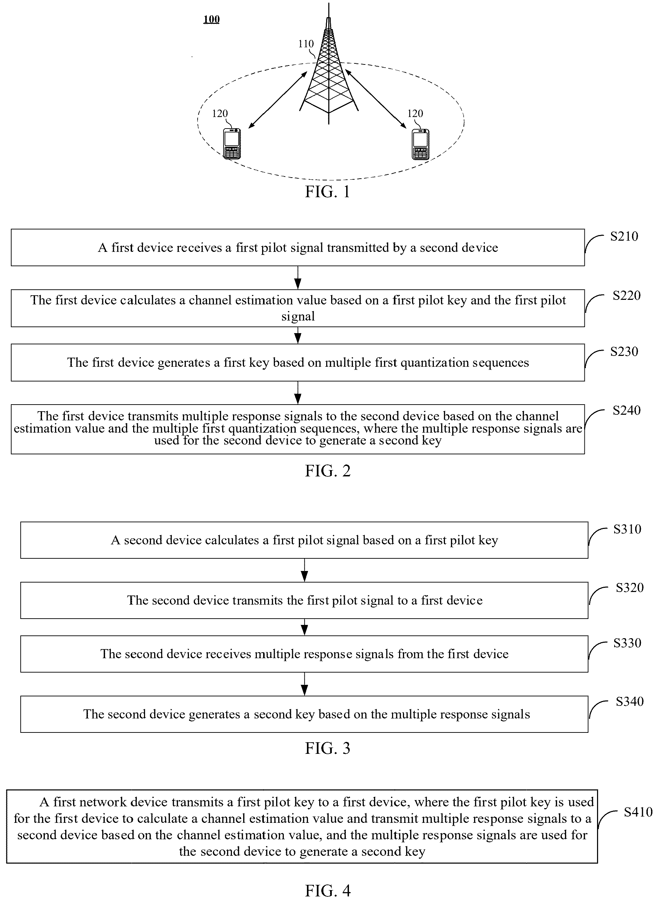

FIG. 1 exemplarily shows a communication system 100. The communication system includes a first network device 110 and two terminals 120. In a possible implementation, the communication system 100 may include multiple first network devices 110, and each first network device 110 may include another number of terminals 120 within its coverage area, which is not limited in the embodiments of the present application. In a possible implementation, the communication system 100 may further include a mobility management entity, an access and mobility management function, and other network entities, which are not limited in the embodiments of the present application. The first network device may include an access network device and a core network device. That is, the communication system may further include multiple core networks for communicating with access network devices. The access network device can be a base station of the LTE, LTE-A, or NR system. Taking the communication system shown in FIG. 1 as an example, the communication device may include the first network device and the terminals with communication functions. The communication device may further include other devices in the communication system, such as a network controller, a mobile management entity and other network entities, which are not limited in the embodiments of the present application.

To facilitate understanding of the embodiments of the present application, basic processes and basic concepts involved in the embodiments of the present application are briefly described below. It should be understood that the basic processes and basic concepts described below do not limit the embodiments of the present application.

FIG. 2 is a schematic flowchart of a key generation method according to an embodiment of the present application. The method includes at least part of the following.

In S210, a first device receives a first pilot signal transmitted by a second device.

In S220, the first device calculates a channel estimation value based on a first pilot key and the first pilot signal.

In S230, the first device generates a first key based on multiple first quantization sequences.

In S240, the first device transmits multiple response signals to the second device based on the channel estimation value and the multiple first quantization sequences, where the multiple response signals are used for the second device to generate a second key.

FIG. 3 is a schematic flowchart of a key generation method according to another embodiment of the present application. The method includes at least part of the following.

In S310, a second device calculates a first pilot signal based on a first pilot key.

In S320, the second device transmits the first pilot signal to a first device.

In S330, the second device receives multiple response signals from the first device.

In S340, the second device generates a second key based on the multiple response signals.

FIG. 4 is a schematic flowchart of a key generation method according to yet another embodiment of the present application. The method includes at least part of the following.

In S410, a first network device transmits a first pilot key to a first device, where the first pilot key is used for the first device to calculate a channel estimation value and transmit multiple response signals to a second device based on the channel estimation value, and the multiple response signals are used for the second device to generate a second key.

The first device is one of a terminal and a second network device. The second network device may be an access network device. The first device may be provided with one or more antennas. In some embodiments, the first device may be called a reader, a tag reader, or the like. All possible names or possible devices of the first device are not exhaustive here.

The second device is a zero-power consumption terminal. In some embodiments, the zero-power consumption terminal may be an ambient-power-enabled IoT (AIoT) device. In some embodiments, the zero-power consumption terminal may be an active zero-power consumption terminal, a passive zero-power consumption terminal, a semi-passive zero-power consumption terminal, or the like. In some embodiments, the second device may also be a terminal with lower computing power. In some possible embodiments, the second device may be called a tag. All possible names or possible device types of the second device are not exhaustive here.

In some embodiments, the first device is a terminal. In this embodiment, the first device and the second device can communicate via a sidelink message. In some embodiments, the first device may be an access network device. For example, the access network device may be any one of a base station, a gNB, an eNB, etc. In this embodiment, the first device and the second device may communicate via an access stratum (AS) message.

The first network device may include at least one of an application function (AF) or a network function (NF). The NF includes at least one of: an access and mobility management function (AMF), an authentication server function (AUSF), HSE, a unified data management function (UDM), a unified data repository (UDR), a security anchor function (SEAF), or a core network dedicated network element. The core network dedicated network element can be referred to as an AIOT network element, or a zero-power function dedicated network element, or a zero-power dedicated network element, a zero-power terminal dedicated network element, or the like. That is, the core network dedicated network element may refer to a network element that has at least zero-power related functions (or AIOT functions), or a core network element that can at least serve the AIOT (or zero-power terminal). It should be understood that the core network dedicated network element can be set up independently, or may be an existing core network element with added zero-power consumption related functions (or AIOT functions). This embodiment does not enumerate all possible situations.

In some possible implementations, the key generation method is implemented only through interaction between the first device and the second device.

In one embodiment, before the first device receives the first pilot signal from the second device, the method may further include: transmitting, by the first device, a first message to the second device. Accordingly, before the second device calculates the first pilot signal based on the first pilot key, the method may further include: receiving, by the second device, a first message from the first device.

The first message may be used to instruct the second device to transmit the first pilot signal, and/or instruct the second device to start key negotiation, and/or instruct the second device to start performing the key generation process, etc. Furthermore, the first message may further be used to trigger the second device to start up or to supply energy to the second device, etc., and all possible functions are not limited or exhausted here.

The first message may also be referred to as a trigger message, a trigger power supply signal, a key generation request command, a key generation request message, or the like. There is no limitation on the name of the first message and content it may carry.

In one embodiment, the second device may actively start transmitting the first pilot signal to the first device. That is, in this embodiment, the second device can actively transmit the first pilot signal without requiring requests, instructions, or triggers from other devices, so that the first device start performing subsequent processes such as key generation. In this embodiment, if the second device is a zero-power terminal, the zero-power terminal may be powered and triggered to start up in other manners. This embodiment does not limit zero-power functions or a startup manner of the zero-power terminal.

In some possible implementations, the second device calculates the first pilot signal based on the first pilot key.

In one embodiment, calculating, by the second device, the first pilot signal based on the first pilot key may include: calculating, by the second device using a first manner, the first pilot signal based on the first pilot key.

The first pilot key is shared between the first device and the second device. Specifically, the first pilot key may be a shared key, and the shared key is shared between the first device and the second device. That is, the first device may use the shared key as the first pilot key. Similarly, the second device may use the shared key as the first pilot key. The shared key can be any one of a pre-shared key (PSK), a pre-distributed key, a private network key, a root key, or the like. In a preferred example, the shared key may be the root key.

The first manner may include at least one of a pseudo-random number generation manner, a hash calculation manner, or a lightweight message authentication code (MAC) algorithm. The hash calculation manner may include hash based message authentication code-secure hash algorithm-256 (HMAC-SHA-256), or other hash algorithms, which are not exhaustive in this embodiment. It should be understood that this is only an exemplary description. In actual processing, the first manner may further include other algorithms and/or functions. For example, the first manner may further include at least one of an advanced encryption standard (AES), snow third generation (SNOW 3G), ZUChongzhi (ZUC), or the like, which is not limited or exhausted in this embodiment.

The first pilot signal may also be referred to as a first private pilot signal, a private pilot signal of the second device, a private pilot of the second device, or the like. A length of the first pilot signal may be L, and a length unit may be bit. L is a positive integer. Preferably, L may be a positive integer greater than or equal to 2. Furthermore, the first pilot signal may refer to a signal carrying a first pilot sequence. That is, the first pilot signal refers to a signal transmitted by the second device to the first device. The signal actually carries the first pilot sequence, and the length of the first pilot sequence is L. It should be noted that the first pilot sequence can be all the content carried by the first pilot signal. Therefore, for ease of description below, the first pilot sequence and the first pilot signal are no longer specifically distinguished. The length of the first pilot signal mentioned below refers to the length of the first pilot sequence, and this will not be repeated hereinafter.

Exemplarily, the first manner may be a pseudo-random number generation manner. Accordingly, the second device calculates the first pilot signal based on the first pilot key using the pseudo-random number generation manner. For example, the pseudo-random number generation manner can be implemented using a pseudo-random number generator. The pseudo-random number generation manner can be expressed as PRNG(), and the process of calculating the first pilot signal can be expressed as $X_T = PRNG (K)$, where $X_T$ represents the first pilot signal, and K represents the first pilot key (or the shared key).

Exemplarily, the first manner may be the hash calculation manner. Accordingly, the second device calculates the first pilot signal based on the first pilot key using the hash calculation manner. In this case, the first pilot signal may be a hash. For example, the hash calculation manner can be expressed as Hash(), and the process of calculating the first pilot signal can be expressed as $X_T = Hash (K)$. The meanings of the contents in this formula are the same as those in the above embodiment and will not be repeated.

Exemplarily, the first manner may be a lightweight MAC algorithm. Accordingly, the second device calculates the first pilot signal based on the first pilot key using the lightweight MAC algorithm. For example, the lightweight MAC algorithm can be expressed as MAC(), and the process of calculating the first pilot signal can be expressed as $X_T = MAC (K)$. The meanings of the contents in this formula are the same as those in the above embodiment and will not be repeated.

In one embodiment, the second device calculating the first pilot signal based on the first pilot key includes the second device calculating the first pilot signal based on the first pilot key and a first parameter. The first parameter includes at least one of a first random number, a length of the first random number, a first timestamp, an identifier of the second device, a length of the identifier of the second device, or a first count value.

The second device calculating the first pilot signal based on the first pilot key and the first parameter may include the second device calculating the first pilot signal based on the first pilot key and the first parameter using the first manner. The description of the first manner is the same as that of the above embodiment and will not be repeated here.

The first random number may be preconfigured, generated by the second device, or indicated by the first device. In a case where the first random number is preconfigured, the first random number may be preconfigured on both the first device and the second device. This embodiment does not limit the selection or configuration manner of the first random number. In a case where the first random number is generated by the second device, the first random number may be generated by the second device before calculating the first pilot signal. The processing by the second device may further include: transmitting, by the second device, the first random number to the first device. This embodiment does not limit the method for generating the first random number. As long as the second device transmits the first random number to the first device before the first device starts to calculate the second pilot signal, it is within the protection scope of this embodiment. For example, the second device may transmit the first random number to the first device while transmitting the first pilot signal. For another example, the second device may transmit the first random number to the first device before calculating the first pilot signal. The specific message for transmission or the specific transmission method is not limited in this embodiment. In a case where the first random number is indicated by the first device, the processing by the first device may further include: transmitting, by the first device, the first random number to the second device. The method for generating the first random number is not limited here. The first device may transmit the first random number to the second device before the second device calculates the first pilot signal. For example, the first random number may be carried by the first message. All possible transmission or carrying methods for the first random number are not limited or exhausted here.

The first timestamp may be a first timestamp at which the second device calculates the first pilot signal.

A starting first count value, starting count time, and a step value corresponding to the first count value can be preset or predefined. That is, the first device and the second device have the same starting first count value, starting count time, and step value. The step value refers to an increment of the first count value each time it is increased. For example, the starting first count value corresponding to the first count value can be 0, or other specified value. The starting count time of the first count value can be a time at which the first device transmits the first message, or the second device receives the first message. The first count value can increase by a step value every time a unit time elapses. The time unit can be set according to actual conditions. For example, the time unit may be any one of seconds, minutes, hours, or time slots, which are not exhausted or limited here. It should be understood that the above is merely an exemplary description. In addition to the possibilities provided in the above examples, other manners may be used for the increment mode of the first count value, the starting first count value and the starting count time. As long as the first device and the second device employ the same manner, it is within the protection scope of this embodiment.

The length of the first random number and the length of the identifier of the second device can each be represented by a value in a specified base, such as a decimal value, a binary value, or a hexadecimal value, which are not exhausted or limited here.

The first parameter used by the second device to calculate the first pilot signal any time may include at least part of the various contents mentioned above. For example, the identifier of the second device can be used as the first parameter, only the first timestamp can be used as the first parameter, or the first timestamp and the first random number can be used as the first parameter, which is not exhausted here. As long as the second device and the first device use the same first parameter, it is within the protection scope of this embodiment.

Exemplarily, the first manner may be a pseudo-random number generation manner. Accordingly, the second device calculates the first pilot signal based on the first pilot key and the first parameter using the pseudo-random number generation manner. For example, the pseudo-random number generation manner can be implemented using a pseudo-random number generator. The pseudo-random number generation manner can be expressed as PRNG(), and the process of calculating the first pilot signal can be expressed as $X_T$ = PRNG (K,P), where $X_T$ represents the first pilot signal, K represents the first pilot key (or shared key), and P represents the first parameter. The content that the first parameter may contain has been described in the above embodiments and will not be repeated here.

Exemplarily, the first manner may be a hash calculation manner. Accordingly, the second device calculates the first pilot signal based on the first pilot key and the first parameter using the hash calculation manner. In this case, the first pilot signal may be a hash. For example, the hash calculation manner can be expressed as Hash(), and the process of calculating the first pilot signal can be expressed as $X_T$ = Hash (K, P) . The meanings of the contents in this formula are the same as those in the above embodiments and will not be repeated.

Exemplarily, the first manner may be a lightweight MAC algorithm. Accordingly, the second device calculates the first pilot signal based on the first pilot key and the first parameter using the lightweight MAC algorithm. For example, the lightweight MAC algorithm can be expressed as MAC(), and the process of calculating the first pilot signal can be expressed as $X_T$ = MAC (K, P) . The meanings of the contents in this formula are the same as those in the above embodiments and will not be repeated.

In some possible implementations, after receiving the first pilot signal, the first device may calculate a channel estimation value based on the first pilot key and the first pilot signal.

The first device calculating the channel estimation value based on the first pilot key and the first pilot signal includes: the first device calculating a fourth pilot signal based on the first pilot key; and the first device calculating the channel estimation value based on the fourth pilot signal and the first pilot signal.

In one embodiment, the first device calculating the fourth pilot signal based on the first pilot key may include: the first device calculating the fourth pilot signal based on the first pilot key using the first manner. The description of the first pilot key is the same as that in the above embodiments and will not be repeated here. The description of the first manner is the same as that of the above embodiments and will not be repeated here.

The fourth pilot signal may also be referred to as a fourth private pilot signal, a private pilot signal of the first device, or the like. A length of the fourth pilot signal should be the same as the length of the first pilot signal, both being L. Furthermore, the fourth pilot signal is specifically a fourth pilot sequence calculated by the first device. The fourth pilot signal is not a signal that the first device must transmit. Therefore, the fourth pilot signal mentioned here mainly refers to the fourth pilot sequence. Unless otherwise specified below, the fourth pilot signal and the fourth pilot sequence have the same meaning.

The specific calculation manner and parameters used for the fourth pilot signal should be the same as those for first pilot signal. That is, in theory, the first device and the second device should obtain the same pilot signal. In this embodiment, in order to distinguish them, they are respectively called the fourth pilot signal and the first pilot signal. For example, the first pilot signal

$X_T$ is calculated using the hash calculation manner and the first pilot key, and the fourth pilot signal $X_R$ should also be calculated using the hash calculation manner and the first pilot key, which are not listed here one by one.

In one embodiment, the first device calculating the fourth pilot signal based on the first pilot key may include the first device calculating the fourth pilot signal based on the first pilot key and the first parameter. The first parameter includes at least one of a first random number, a length of the first random number, a first timestamp, an identifier of the second device, a length of the identifier of the second device, or a first count value.

The first device calculating the fourth pilot signal based on the first pilot key and the first parameter may include the first device calculating the fourth pilot signal based on the first pilot key and the first parameter using a first manner.

The descriptions of the first manner, the first pilot key, the first parameter, and the fourth pilot signal are the same as those in the above embodiments and are not repeated here. It should be noted that the specific calculation manner of the fourth pilot signal and the content of the first parameter used should be the same as those of the first pilot signal. That is, in theory, the two should obtain the same pilot signal. For example, the first pilot signal is calculated based on the first pilot key and the first parameter (such as the identifier of the second device and the first random number) using the lightweight MAC algorithm. The fourth pilot signal should also be calculated based on the first pilot key and the first parameter (such as the identifier of the second device and the first random number) using the lightweight MAC algorithm. These are not listed here one by one.

In one embodiment, the first device calculating the channel estimation value based on the fourth pilot signal and the first pilot signal may mean that the first device calculates the channel estimation value based on the fourth pilot signal and the first pilot signal using a second manner. The second manner may include at least one of least squares, minimum mean square error, or the like. It should be understood that this is only an exemplary explanation. Any method that can calculate the channel estimation value can be used in this embodiment and is within the protection scope of this embodiment, which is not exhaustive here.

In this implementation, the first pilot signal used by the first device to calculate the channel estimation value refers to the first pilot signal received by the first device. The first pilot signal received by the first device is different from the first pilot signal transmitted by the second device. This is because the first pilot signal transmitted by the second device is a first pilot signal transmitted by the transmitting unit of the second device (such as an antenna of the second device), while the first pilot signal received by the first device (such as an antenna of the first device) is a first pilot signal after wireless transmission. The first pilot signal may suffer channel loss during the wireless transmission process.

Therefore, the first pilot signal received by the first device and the first pilot signal transmitted by the second device may differ in at least some parameters such as amplitude, strength, and phase. In this implementation, the first device calculates the channel estimation value between the first device and the second device based on the first pilot key and the received first pilot signal, so that the channel loss is subsequently offset through the channel estimation value.

In some possible implementations, different response signals of the multiple response signals occupy different time domain ranges. That is, the first device transmits one response signal to the second device each time.

In this implementation, the one response signal transmitted by the first device each time corresponds to one first quantization sequence. In other words, when the first device transmits an i-th response signal for an i-th time, an i-th group of transmission parameters corresponding to the i-th response signal is related to an i-th first quantization sequence of the multiple first quantization sequences and the channel estimation value.

In some possible embodiments, the first device may generate a first key based on the multiple first quantization sequences.

The processing by the first device may further include: the first device generating the i-th first quantization sequence based on an i-th initial quantization sequence of each type corresponding to the i-th first quantization sequence. The i-th first quantization sequence is any one of the multiple first quantization sequences, and i is a positive integer.

Before the first device generates the i-th first quantization sequence based on the i-th initial quantization sequence of each type corresponding to the i-th first quantization sequence, it may further include: the first device selecting the i-th initial quantization sequence of each type of one or more types corresponding to the i-th first quantization sequence.

The i-th initial quantization sequence of each type of the one or more types corresponding to the i-th first quantization sequence refers to the i-th initial quantization sequence of each type for generating the i-th first quantization sequence.

The one or more types include at least one of a phase type, an amplitude type or a received signal strength indicator (RSSI) type.

The first device selecting the i-th initial quantization sequence of each type of the one or more types corresponding to the i-th first quantization sequence may include: the first device selecting the i-th initial quantization sequence of each type of the one or more types corresponding to the i-th first quantization sequence from multiple candidate quantization sequences of multiple candidate types.

The multiple candidate types include part or all of a candidate phase type, a candidate amplitude type, and a candidate RSSI type. Each candidate type of the multiple candidate types corresponds to multiple candidate quantization sequences. Here, each candidate type and its corresponding multiple candidate quantization sequences may be included in a quantization scheme, and the quantization scheme is predefined. That is, the quantization scheme can be obtained and stored in advance in the first device.

The first device generating the i-th first quantization sequence based on the i-th initial quantization sequence of each type corresponding to the i-th first quantization sequence may include one of: in a case where the i-th first quantization sequence corresponds to an i-th initial quantization sequence of only one type, the first device using the i-th initial quantization sequence of the type as the i-th first quantization sequence; or in a case where the i-th first quantization sequence corresponds to the i-th initial quantization sequence of each type of the multiple types, the first device generating the i-th first quantization sequence based on the i-th initial quantization sequence of each type.

The first device generating the i-th first quantization sequence based on the i-th initial quantization sequence of each type may include one of: the first device concatenating the i-th initial quantization sequence of each type based on a first specified order to obtain the i-th first quantization sequence; or the first device calculating the first quantization sequence based on the i-th initial quantization sequence of each type using a third manner.

The first specified order may be predefined. For example, the first specified order may be an order specified according to type. For example, the first specified order may include: in a case where there is the phase type, placing the phase type at a starting position; in a case where there is the amplitude type, placing the amplitude type after the phase type and before the RSSI type; in a case where there is the RSSI type, placing the RSSI type at a last position. That is, if the types selected this time only include the amplitude type and the phase type, the i-th initial quantization sequence of the phase type and the i-th initial quantization sequence of the amplitude type are placed in sequence and then concatenated to obtain the i-th first quantization sequence. It should be understood that this is only an exemplary description and does not mean that there is only one first specified order mentioned above; and it is not exhaustive in this embodiment.

The third manner can be preconfigured. For example, the third manner can include at least one of exclusive OR (XOR) operation, concatenation operation, or the like. It should be understood that this is only an exemplary explanation. In actual processing, the third manner can further include other algorithms or functions, such as the AES algorithm, which are not exhaustive here.

The foregoing description is only provided by taking an example in which the first device generates or obtains the first quantization sequence at any one time.

It should be noted that different response signals of the multiple response signals transmitted by the first device correspond to different first quantization sequences, and types of initial quantization sequences corresponding to different first quantization sequences may be the same or different.

In some embodiments, the first device may use the same type of initial quantization sequence each time to generate a first quantization sequence corresponding to each response signal. In this case, the first device and the second device default to or are preconfigured with the same one or more types for the quantization sequences (first quantization sequences or second quantization sequences) corresponding to all response signals. For example, the first device selects an initial quantization sequence of the amplitude type as the first quantization sequence each time; or, the first device selects an initial quantization sequence of the phase type as the first quantization sequence each time; or, the first device selects an initial quantization sequence of the amplitude type and an initial quantization sequence of the phase type to generate the first quantization sequence each time. That is, the first device selects the same type of initial quantization sequence each time, uses the same processing method to obtain the first quantization sequence, and finally obtains multiple first quantization sequences. All possibilities are not exhaustive here.

In one embodiment, each response signal of the multiple response signals may have a first correspondence with the type for generating the quantization sequence. The first correspondence is used for the first device to determine the type of initial quantization sequences that is used to generate the first quantization sequence corresponding to each response signal. Furthermore, the first correspondence is used for the second device to determine type of the received quantization sequence that is used to generate the second quantization sequence corresponding to each response signal.

The first correspondence may be referred to as a signal type correspondence or other name, which is not limited or exhaustive. The first correspondence may be predefined, or negotiated between the first device and the second device, which is not limited here. As long as the first device and the second device are configured with the same first correspondence, it is within the protection scope of this embodiment.

The first correspondence may be used to indicate one or more unified types. That is, the first correspondence may enable the first device to determine that types of initial quantization sequences that correspond to different response signals and are used to generate different first quantization sequences are the same. For example, they may all be amplitude types, phase types, or RSSI types; or they may all be amplitude types and phase types, which are not exhaustive here.

Alternatively, the first correspondence may be used to indicate a type corresponding rule. For example, the type corresponding rule may include: the i-th response signal corresponding to the RSSI type, the (i+1)-th response signal corresponding to the amplitude type, and so on. This is merely an exemplary description, as long as the type selection rule enables the first device or the second device to determine the types that correspond to different response signals and are used to generate different quantization sequences.

Taking the first device as an example, the first device can determine to select the phase type in an i-th selection based on the first correspondence, select the i-th initial quantization sequence of the phase type from multiple candidate quantization sequences of multiple candidate types, and directly use the i-th initial quantization sequence of the phase type as the i-th first quantization sequence. The first device can determine to select the RSSI type in an (i+1)-th selection based on the first correspondence, select the (i+1)-th initial quantization sequence of the RSSI type from the multiple candidate quantization sequences of the multiple candidate types, and directly use the (i+1)-th initial quantization sequence of the RSSI type as the (i+1)-th first quantization sequence, and so on, which will not be repeated.

Taking the first device as an example again, the first device can determine to select the phase type in the i-th selection based on the first correspondence, select an i-th initial quantization sequence of the amplitude type from the multiple candidate quantization sequences of the multiple candidate types, and directly use the i-th initial quantization sequence of the amplitude type as the i-th first quantization sequence. The first device can determine to select the RSSI type and the phase type in the (i+1)-th selection based on the first correspondence, select an (i+1)-th initial quantization sequence of the RSSI type and an (i+1)-th initial quantization sequence of the phase type from multiple candidate quantization sequences of multiple candidate types, and concatenate the (i+1)-th initial quantization sequence of the RSSI type and the (i+1)-th initial quantization sequence of the phase type in the first specified order to obtain the (i+1)-th first quantization sequence, and so on, which is not repeated.

The above is merely an exemplary description. In actual processing, the first correspondence is not limited to the several possibilities listed above. As long as the first device and the second device can determine one or more types that correspond to each response signal and are used to generate the quantization sequence (the first quantization sequence or the second quantization sequence) based on the first correspondence, they are all within the protection scope of this embodiment, which will not be exhaustive here.

The first device generating the first key based on the multiple first quantization sequences may mean that the first device orders the multiple first quantization sequences and concatenates the ordered first quantization sequences to obtain the first key.

The first device ordering the multiple first quantization sequences may mean that the multiple first quantization sequences are ordered in an order of their generation. Correspondingly, the first key being obtained by concatenating the first quantization sequences based on the order of the first quantization sequences may mean that the first key being obtained by concatenating the first quantization sequences in the order of their generation. A first-generated quantization sequence can be placed at a starting position and a last-generated first quantization sequence can be placed at a last position to obtain the first key, or vice versa. This embodiment does not enumerate all possible concatenating orders or manners used when generating the first key. As long as the first device and the second device use the same concatenating manner, it is within the protection scope of this embodiment.

In some possible implementations, the first device transmitting multiple response signals to the second device based on the channel estimation value and the multiple first quantization sequences, includes: the first device determining multiple groups of parameter values based on the multiple first quantization sequences; the first device determining multiple groups of transmission parameters based on the channel estimation value and the multiple groups of parameter values; and the first device transmitting the multiple response signals to the second device based on the multiple groups of transmission parameters.

For example, any one first quantization sequence of the multiple first quantization sequences is still expressed as the i-th first quantization sequence. The first device determining the multiple groups of parameter values based on the multiple first quantization sequences, includes: the first device determining an i-th group of parameter values based on first quantization information and an i-th initial quantization sequence of each type of one or more types corresponding to the i-th first quantization sequence. The first quantization information is used to determine a candidate parameter value corresponding to each candidate quantization sequence of the multiple candidate quantization sequences. The one or more types include at least one of the phase type, the amplitude type, or the RSSI type. The i-th first quantization sequence is one of the multiple first quantization sequences. The i-th group of parameter values is one of the multiple groups of parameter values. i is an integer.

The first quantization information may be predefined. The first quantization information may be included in a quantization scheme, and the quantization scheme may be predefined.

Further description is provided in combination with the above embodiment. The quantization scheme may include the first quantization information, each candidate type of the multiple candidate types, and the multiple candidate quantization sequences corresponding to the multiple candidate types. That is, for the first device, the quantization scheme may be presaved, preconfigured on the first device, or the like; and for the second device, the quantization scheme may be presaved, preconfigured on the second device, or the like. This embodiment does not limit the manner in which the first device and the second device predefine, presave, or preconfigure the quantization scheme. As long as the first device and the second device use the same quantization scheme and the same quantization sequence of the same type corresponds to the same parameter value, they are within the protection scope of this embodiment. In addition, it should be noted that the quantization scheme is constructed based on a reception state of the second device.

Optionally, the first quantization information may include a mapping relationship table. The mapping relationship table includes the candidate parameter value corresponding to each candidate quantization sequence of the multiple candidate quantization sequences.

Optionally, the first quantization information may include a first quantization calculation manner. An input of the first quantization calculation manner may include any candidate quantization sequence, and its output may include a candidate parameter value corresponding to the any candidate quantization sequence.

It should be noted that in some possible examples, the candidate parameter value may also be referred to as a candidate quantization value, a candidate quantization reference value, a candidate quantization parameter values, or the like. If there is no special explanation below, the above name concepts are the same and will not be repeated.

Furthermore, the quantization scheme may include different quantization schemes corresponding to different candidate types, and the specific quantization scheme may include at least one of a phase quantization scheme, an amplitude quantization scheme, or an RSSI quantization scheme. The first quantization information also includes first phase quantization information, first amplitude quantization information and first RSSI quantization information. The candidate amplitude type and its corresponding candidate quantization sequences, and the first amplitude quantization information are saved in the amplitude quantization scheme. The candidate phase type and its corresponding candidate quantization sequences, and the first phase quantization information are saved in the amplitude quantization scheme. The candidate RSSI type and its corresponding candidate quantization sequences, and the first RSSI quantization information are saved in the RSSI quantization scheme.

The contents of the first phase quantization information, the first amplitude quantization information, and the first RSSI quantization information are similar to those in the above examples of the first quantization information, with the only difference being the addition of types. For example, the first amplitude quantization information may include an amplitude mapping relationship table, specifically including a candidate amplitude value corresponding to each candidate quantization sequence of the multiple candidate quantization sequences under the amplitude type. Alternatively, the first amplitude quantization information includes a first amplitude quantization calculation manner. An input of the first amplitude quantization calculation manner is a candidate quantization sequence of the amplitude type, and its output is a candidate amplitude value. The contents of the first phase quantization information and the first RSSI quantization information are similar to those of the first amplitude quantization information, with the only difference being the type, so they are not repeated.

In some embodiments, the i-th group of parameter values includes at least one of an i-th amplitude value, an i-th phase value, or an i-th RSSI value.

The first device determining the i-th group of parameter values based on the first quantization information and the i-th initial quantization sequence of each type of one or more types corresponding to the i-th first quantization sequence, includes at least one of:

in a case where the i-th initial quantization sequence of each type of the one or more types corresponding to the i-th first quantization sequence includes an i-th initial quantization sequence of the amplitude type, the first device determining an i-th amplitude value in the i-th group of parameter values based on the i-th initial quantization sequence of the amplitude type and the first amplitude quantization information;
in a case where the i-th initial quantization sequence of each type of the one or more types corresponding to the i-th first quantization sequence includes an i-th initial quantization sequence of the phase type, the first device determining an i-th phase value in the i-th group of parameter values based on the i-th initial quantization sequence of the phase type and the first phase quantization information; or
in a case where the i-th initial quantization sequence of each type of the one or more types corresponding to the i-th first quantization sequence includes an i-th initial quantization sequence of the RSSI type, the first device determining an i-th RSSI value in the i-th group of parameter values based on the i-th initial quantization sequence of the RSSI type and the first RSSI quantization information.

The correspondence between the i-th first quantization sequence and the i-th initial quantization sequence of each type has been described in the aforementioned embodiments and will not be repeated here. It should be noted that the i-th first quantization sequence can correspond to an i-th initial quantization sequence of one type, or an i-th initial quantization sequence of each type of the multiple types. Therefore, it is necessary to calculate the i-th group of parameter values in combination with the i-th initial quantization sequence of each type.

The i-th group of transmission parameters in the one or more groups of transmission parameters includes at least one of an i-th transmission phase, or an i-th transmitted power.

The first device determining the multiple groups of transmission parameters based on the channel estimation value and the multiple groups of parameter values, includes at least one of:

in a case where the i-th group of parameter values includes the i-th amplitude value, the first device calculating an i-th transmitted power in the i-th group of transmission parameters based on a channel estimation amplitude value and the i-th amplitude value, where the i-th group of transmission parameters is one of the multiple groups of transmission parameters;
in a case where the i-th group of parameter values includes the i-th phase value, the first device calculating an i-th transmission phase in the i-th group of transmission parameters based on a channel estimation phase value and the i-th phase value; or
in a case where the i-th group of parameter values includes the i-th RSSI value, the first device calculating the i-th transmitted power in the i-th group of transmission parameters based on the channel estimation amplitude value and the i-th RSSI value.

It should be noted that since the RSSI value can be understood as a square of the amplitude value, both the i-th amplitude value and the i-th RSSI value can be used to determine the transmitted power. Based on this, when the first correspondence is set, or when the type(s) that correspond to any response signal and are used to generate the quantization sequence are default, the amplitude type and the RSSI type can be used for different response signals respectively. That is, the i-th group of parameter values should not include the i-th amplitude value and the i-th RSSI value at the same time, so as to avoid conflicts between the two when different i-th transmitted powers are calculated.

Of course, in order to resolve the conflict problem, the first RSSI quantization information and the first amplitude quantization information can also be set to have the same correspondence. For example, in a case where a square of a certain candidate amplitude value is equal to one candidate RSSI value, the two values have the same candidate quantization sequence corresponding to their respective corresponding quantization information. This can also be within the protection scope of this embodiment, and all possible situations are not enumerated here.

In addition, the channel estimation value may specifically include a channel estimation amplitude value and a channel estimation phase value. This embodiment does not limit a manner in which the channel estimation value is split to obtain the channel estimation amplitude value and the channel estimation phase value. It is only necessary to understand that the channel estimation amplitude value is subsequently used to offset power loss or power attenuation during the channel transmission process, and the channel estimation phase value is subsequently used to offset phase change or phase attenuation during the channel transmission process.

Optionally, in a case where the i-th group of parameter values includes the i-th amplitude value, the first device calculates the i-th transmitted power in the i-th group of transmission parameters based on the channel estimation amplitude value and the i-th amplitude value.

The first quantization information (which can specifically be the first amplitude quantization information) is constructed based on the reception state (such as a received amplitude) of the second device. Therefore, the i-th amplitude value obtained based on the first amplitude quantization information refers to a predicted amplitude value, expected amplitude value, or theoretical amplitude value of the second device when receiving the i-th response signal. In this embodiment, it is necessary to combine the channel estimation value and the i-th amplitude value to further determine the i-th transmitted power of the first device.

Specifically, the first device calculating the i-th transmitted power in the i-th group of transmission parameters based on the channel estimation amplitude value and the i-th amplitude value, may include: calculating a square value of the channel estimation amplitude value to obtain a first value, multiplying the first value by path loss to obtain a second value; calculating a square value of the i-th amplitude value; and dividing the square value of the i-th amplitude value by the second value to obtain the i-th transmitted power.

Calculating the square value of the channel estimation amplitude value to obtain the first value may include: multiplying an absolute value of the i-th response signal by an absolute value of the channel estimation amplitude value to obtain a third value, and calculating a square value of the third value to obtain the first value.

The path loss may be set according to actual conditions, and this embodiment does not limit the manner for obtaining the path loss.

An exemplary description is provided for the calculation manner of the i-th transmitted power through the formula. In a case where the quantization value corresponding to the i-th initial quantization sequence of the amplitude type selected by the first device (i.e., the i-th amplitude value) is expressed as $q_k^i$, i.e., in a case where an amplitude of an i-th response signal received by the Tag is $q_k^i$, it can be calculated that

$$P_R^i = \frac{(q_k^i)^2}{\left(\left|x_{R,\ i}\right|\left|h'_{R,T}\right|\right)^2 PL_{R,T}}$$ , where $P_R^i$ represents the i-th transmitted power, $x_R$ represents the i-th response signal, $h'_{R,T}$ represents the channel estimation amplitude value, and $h'_{R,T}$ represents the path loss.

Optionally, in a case where the i-th group of parameter values includes the i-th phase value, the first device calculates the i-th transmission phase in the i-th group of transmission parameters based on the channel estimation phase value and the i-th phase value.

The first quantization information (which can specifically be the first phase quantization information) is constructed based on the reception state (such as a received phase) of the second device. Therefore, the i-th phase value obtained based on the first phase quantization information refers to a predicted phase value, expected phase value, or theoretical phase value of the second device when receiving the i-th response signal. In this embodiment, it is necessary to combine the channel estimation value and the i-th phase value to further determine the i-th transmission phase of the first device.

Specifically, the first device calculating the i-th transmission phase in the i-th group of transmission parameters based on the channel estimation phase value and the i-th phase value may include: subtracting the channel estimation phase value from the i-th phase value to obtain the i-th transmission phase in the i-th group of transmission parameters. The exemplary description is provided for the calculation manner of the i-th transmission phase through the formula. Assuming that the quantization value corresponding to the i-th initial quantization sequence of the phase type selected by the first device (the i-th phase value) is $\emptyset_k^i$, i.e., the amplitude of the i-th response signal received by the Tag is $\emptyset_k^i$, it can be calculated that $\emptyset_R^i = \emptyset_k^i - \emptyset(h'_{R,T})$, where $\emptyset_R^i$ represents the i-th transmission phase, and $\emptyset(h'_{R,T})$ is the channel estimation phase value.

Optionally, in a case where the i-th group of parameter values includes the i-th RSSI value, the first device calculates the i-th transmitted power in the i-th group of transmission parameters based on the channel estimation amplitude value and the i-th RSSI value.

The first quantization information (which can specifically be the first RSSI quantization information) is constructed based on the reception state (such as RSSI) of the second device. Therefore, the i-th RSSI value obtained based on the RSSI first quantization information refers to a predicted RSSI value, expected RSSI value, or theoretical RSSI value of the second device when receiving the i-th response signal. In this embodiment, it is necessary to combine the channel estimation value and the i-th RSSI value to further determine the transmitted power of the first device.

Specifically, the first device calculating the i-th transmitted power in the i-th group of transmission parameters based on the channel estimation amplitude value and the i-th RSSI value may include: calculating a square value of the channel estimation amplitude value to obtain a first value, multiplying the first value by the path loss to obtain a second value; and dividing the i-th RSSI value by the second value to obtain the i-th transmitted power.

Calculating the square value of the channel estimation amplitude value to obtain the first value may include: multiplying an absolute value of the response signal by an absolute value of the channel estimation amplitude value to obtain a third value, and calculating an square value of the third value to obtain the first value. The path loss may be set according to actual conditions, and this embodiment does not limit the manner for obtaining the path loss.

The difference between this example and the above example of using the i-th amplitude value to calculate the i-th transmitted power is that the i-th RSSI value itself is approximately equal to the square of the i-th amplitude value. Therefore, the i-th RSSI value can be directly used to calculate the i-th transmitted power. The exemplary description is provided for the calculation manner of the i-th transmitted power through the formula. In a case where the RSSI value corresponding to the i-th initial quantization sequence of the RSSI type selected by the first device (i.e., the i-th RSSI value) is expressed as $q_{RSSI}^i$, i.e., in a case where the RSSI of the i-th response signal received by the Tag is $q_{RSSI}^i$, it can be calculated that $P_R^i = \dfrac{q_{RSSI}^i}{\left(|x_R||h'_{R,T}|\right)^2 PL_{R,T}}$, where $P_R^i$ represents the i-th transmitted power, $x_R$ represents the i-th response signal, $h'_{R,T}$ represents the channel estimation amplitude value, and $PL_{R,T}$ represents the path loss.

It should be understood that the calculation manners of the i-th transmitted power and the i-th transmission phase are exemplary descriptions, and other calculation manners may be used in actual processing, which are not exhaustive in this embodiment.

In some embodiments, the first device transmitting the multiple response signals to the second device based on the multiple groups of transmission parameters, includes: the first device transmitting an i-th response signal to the second device based on the i-th group of transmission parameters. The i-th response signal is one of the multiple response signals, and different response signals of the multiple response signals occupy different time domain ranges.

That is, the first device transmits response signals at different times based on different groups of transmission parameters of the multiple groups of transmission parameters.

Each response signal of the multiple response signals is a second pilot signal, and the second pilot signal is calculated based on the first pilot key.

Optionally, the second pilot signal may be the same as the fourth pilot signal. After generating the fourth pilot signal, the first device directly uses the fourth pilot signal as each response signal. That is, the content of each response signal is the same, and each response signal is the fourth pilot signal.

Optionally, the second pilot signal may be different from the fourth pilot signal. That is, the first device generates the fourth pilot signal only for channel estimation. Before transmitting the multiple response signals, the processing by the first device may further include: the first device calculating the second pilot signal based on the first pilot key. In addition, the content of each response signal is the same, and each response signal is the second pilot signal.

Specifically, the first device calculating the second pilot signal based on the first pilot key may include: the first device calculating the second pilot signal based on the first pilot key and a third parameter. The third parameter may include at least one of a third random number, a length of the third random number, a second timestamp, an identifier of the second device, a length of the identifier of the second device, or a second count value.

A type of the third parameter is similar to the type of the first parameter.

The third random number may be the same as or different from the first random number. If the third random number is different from the first random number, the third random number may be predefined, determined by the first device, or indicated by the second device. If the third random number is predefined, the first device and the second device need to predefine the same third random number. If the third random number is determined by the first device, the first device may further transmit the third random number to the second device. This embodiment does not limit an occasion of the first device transmitting the third random number or a message carrying the third random number. As long as it is before the first device transmits the multiple response signals to the second device, it is within the protection scope of this embodiment. If the third random number is indicated by the second device, the second device may further transmit the third random number to the first device. This embodiment does not limit an occasion of the second device transmitting the third random number or a message carrying the third random number. As long as it is before the first device transmits the multiple response signals to the second device, it is within the protection scope of this embodiment.

The second timestamp may refer to a timestamp at which the second pilot signal is calculated, or may be a timestamp at which the first response signal starts to be transmitted. The related description of the second count value is similar to that of the above embodiments and will not be repeated.

The detailed process of calculating the second pilot signal is similar to that of calculating the first pilot signal or the fourth pilot signal in the above embodiments, and will not be repeated here.

In some possible embodiments, the first device determining the multiple groups of transmission parameters based on the channel estimation value and the multiple groups of parameter values, includes: the first device calculating a radio frequency coefficient based on the channel estimation value; and the first device determining the multiple groups of transmission parameters based on the multiple groups of parameter values and the radio frequency coefficient.

This embodiment is particularly applicable to a scenario where the first device has multiple antennas.

The first device receiving the first pilot signal, includes: each antenna of multiple antennas of the first device receiving the first pilot signal. Correspondingly, the first device calculating the channel estimation value based on the fourth pilot signal and the first pilot signal may mean that the first device calculates the channel estimation value based on the fourth pilot signal and the first pilot signal received by each antenna.

For example, it is assumed that the first device has N antennas, where N is an integer greater than or equal to 2. The first pilot signal received by each antenna of the multiple antennas of the first device can be expressed as $Y_R$. $Y_R = [y_1, ..., y_L]_{N \times L} = H_{T,R}X_T + N_R$, where $[y_1, ..., y_L]_{N \times L}$, represents the first pilot signal of length L received by each antenna of the N antennas, $H_{T,R}$ represents the channel between the second device and the first device (or called a small-scale channel fading coefficient), $X_T$ represents the first pilot signal, and $N_R \sim CN(0, \sigma_R^2)$ is Gaussian noise at the first device side. $X_T = diag(x_1, ..., x_L)$, where diag() represents a diagonal matrix, and "$x_1, ..., x_L$" represents each bit of L bits in the first pilot signal.

The first device calculating the channel estimation value based on the fourth pilot signal and the first pilot signal received by each antenna may mean that the first device subtracts the Gaussian noise at the first device side from the first pilot signal received by each antenna, and then divides the obtained result by the fourth pilot signal of length L to obtain the channel estimation value. The fourth pilot signal of length L can be expressed as $X_R = diag(x_1, ..., x_L)$. The channel estimation value refers to the channel estimation value between the first device and the second device estimated by the first device. The channel estimation value can be expressed as

$$H'_{R,T} = [\hat{H}_1, \quad \cdots, \quad \hat{H}_N]^H$$, where $H'_{R,T}$ represents the channel estimation value, $\hat{H}_1$ represents a channel estimation value corresponding to the first antenna, and so on, $\hat{H}_N$ represents a channel estimation value corresponding to the N-th antenna, and the "H" in the upper right corner of the bracket represents transposed conjugate of the matrix.

The first device calculating the radio frequency coefficient $W_R$ based on the channel estimation value may mean that the radio frequency coefficient is composed of an inverse of the channel estimation value of each antenna. For example, the radio frequency coefficient may be expressed through the following formula:

$$W_R = \begin{bmatrix} \dfrac{1}{\hat{H}_1} \\ \vdots \\ \dfrac{1}{\hat{H}_N} \end{bmatrix}.$$

In this embodiment, the radio frequency coefficient is composed of, or calculated or generated using the inverse of the channel estimation value corresponding to each antenna. Accordingly, the radio frequency coefficient can server to offset the corresponding channel characteristics (such as the transmission attenuation or transmission loss of the signal in the channel), thereby making the signal transmitted to the corresponding second device in the channel the same or substantially the same as the signal transmitted by the first device. All possible roles or functions of the radio frequency coefficient are not exhaustive here. For example, the radio frequency coefficient may also be referred to as an antenna weight coefficient, an antenna coefficient, an antenna radio frequency transmission coefficient, a radio frequency transmission coefficient, a gain coefficient, a transmission weight coefficient, or the like, and all possible names are not exhaustive here.

The first device determining the multiple groups of transmission parameters based on the multiple groups of parameter values and the radio frequency coefficient, includes: the first device determining the i-th group of transmission parameters based on the i-th group of parameter values and the radio frequency coefficient. The i-th group of transmission parameters is one of the multiple groups of transmission parameters. The description of the i-th group of parameter values is the same as that in the above embodiments and will not be repeated here.

Specifically, the first device determining the i-th group of transmission parameters based on the i-th group of parameter values and the radio frequency coefficient may include: the first device determining an i-th group of predicted parameters based on the i-th group of parameter values, and using the i-th group of predicted parameters and the radio frequency coefficient as the i-th group of transmission parameters.

The i-th group of predicted parameters may include at least one of an i-th predicted power or an i-th predicted phase. The first device determining the i-th group of predicted parameters based on the i-th group of parameter values, includes at least one of: in a case where the i-th group of parameter values includes the i-th amplitude value, determining the i-th predicted power based on the i-th amplitude value; in a case where the i-th group of parameter values includes the i-th phase value, using the i-th phase value as the i-th predicted phase; or in a case where the i-th group of parameter values includes the i-th RSSI value, determining the i-th predicted power based on the i-th RSSI value.

In some possible cases, since the radio frequency coefficient is generated based on the channel estimation value, the radio frequency coefficient contains power when normalization processing is not performed. In this case, determining the i-th predicted power based on the i-th amplitude value can be to use the i-th amplitude value as the i-th predicted power. In other possible cases, if the radio frequency coefficient is normalized, determining the i-th predicted power based on the i-th amplitude value may refer to: calculating a product of the square of the fourth pilot signal and the path loss as a fourth value, and dividing the square of the i-th amplitude value by the fourth value to obtain the i-th predicted power. The normalization of the radio frequency coefficient can be achieved using matrix normalization. This embodiment does not exhaust or limit the specific implementation manners of matrix normalization.

Determining the i-th predicted power based on the i-th RSSI value may refer to: directly using the i-th RSSI value as the i-th predicted power. Directly using the i-th RSSI value as the i-th predicted power can be used in a case where the radio frequency coefficient is not normalized, and can also be used in a case where the radio frequency coefficient is normalized, which is not limited in this embodiment.

In this embodiment, the first device transmitting the multiple response signals to the second device based on the multiple groups of transmission parameters, includes: the first device transmitting an i-th response signal to the second device based on the i-th group of transmission parameters. The i-th response signal is one of the multiple response signals, and different response signals of the multiple response signals occupy different time domain ranges.

Here, transmitting the i-th response signal to the second device based on the i-th group of transmission parameters may mean that: if the i-th group of transmission parameters includes the i-th predicted power, using the i-th predicted power and the radio frequency coefficient to transmit the i-th response signal to the second device; if the i-th group of transmission parameters includes the i-th predicted phase, using the i-th predicted phase and the radio frequency coefficient to transmit the i-th response signal to the second device; if the i-th group of transmission parameters includes the i-th predicted power and the i-th predicted phase, controlling the use of the i-th predicted power, the i-th predicted phase and the radio frequency coefficient to transmit the i-th response signal to the second device.

With this solution, the first device still only transmits one response signal at a time, and the transmission loss of each response signal in the channel can be offset through the radio frequency coefficient used by the first device. Therefore, the predicted power and/or predicted phase can be determined more efficiently and directly based on the i-th group of parameter values, so that the second device can directly measure at least one of a received phase, received amplitude, or an RSSI for each response signal, and then can obtain the same quantization sequence as the first device.

For example, assuming that the i-th response signal is the fourth pilot signal with the length L ($\boldsymbol{X_R} = diag$ ($x_1, ..., x_L$)), the i-th response signal transmitted using the radio frequency coefficient can be expressed as:

$$\boldsymbol{X_{R,i}} = \begin{bmatrix} \frac{x_1}{\hat{H}_1} & \cdots & \frac{x_L}{\hat{H}_1} \\ \vdots & \ddots & \vdots \\ \frac{x_1}{\hat{H}_N} & \cdots & \frac{x_L}{\hat{H}_N} \end{bmatrix}_{N \times L}$$

. The i-th response signal

$\boldsymbol{X_{R,i}}$ may be a response signal processed through the predicted phase and/or predicted power, which is not illustrated in the formula for the sake of simplicity.

In some possible implementations, after receiving the multiple response signals, the second device may generate a second key based on the multiple response signals.

The second device generating the second key based on the multiple response signals, includes: the second device determining multiple second quantization sequences based on reception parameters of each response signal of the multiple response signals; and the second device generating the second key based on the multiple second quantization sequences.

The second device determining the multiple second quantization sequences based on the reception parameters of each response signal of the multiple response signals, includes: the second device determining an i-th received quantization sequence of each type of one or more types based on reception parameters of the i-th response signal and the second quantization information. The one or more types include at least one of a phase type, an amplitude type, or an RSSI type. The second quantization information is used to determine a candidate parameter value corresponding to each candidate quantization sequence of one or more candidate quantization sequences, and a parameter range corresponding to each candidate parameter value of one or more candidate parameter values. The i-th response signal is one of the multiple response signals, and i is an integer. The second device generates an i-th second quantization sequence based on the i-th received quantization sequence of each type. The i-th second quantization sequence is one of the multiple second quantization sequences. It should be noted that in some possible examples, the parameter range may also be called a quantization interval, or a quantization parameter interval, etc. Unless otherwise specified below, concepts of the quantization interval, parameter range, and quantization parameter interval are the same and will not be repeated.

The reception parameters of the i-th response signal are measured by the second device. The reception parameters of the i-th response signal include at least one of a received amplitude of the i-th response signal, a received phase of the i-th response signal, or an RSSI of the i-th response signal.

The second device determining the i-th received quantization sequence of each type of the one or more types based on the reception parameters of the i-th response signal and the second quantization information, includes at least one of: the second device determining an i-th received quantization sequence of the amplitude type based on the received amplitude of the i-th response signal and second amplitude quantization information; the second device determining an i-th received quantization sequence of the phase type based on the received phase of the i-th response signal and second phase quantization information; or the second device determining an i-th received quantization sequence of the RSSI type based on an RSSI of the i-th response signal and second RSSI quantization information.

Here, the second quantization information may be predefined. The second quantization information may be included in a quantization scheme, and the quantization scheme may be predefined. The quantization scheme may be obtained in advance by both the first device and the second device. This embodiment does not limit the manner in which the first device and the second device predefine, presave, or preconfigure the quantization scheme. As long as the first device and the second device use the same quantization scheme, it is within the protection scope of this embodiment.

In combination with the above embodiment, the quantization scheme may further include first quantization information, each candidate type of the multiple candidate types and its corresponding multiple candidate quantization sequences, and second quantization information. For the first device, the quantization scheme may be presaved in the first device, or preconfigured on the first device, etc. Preferably, the first device may only save the first quantization information in the quantization scheme, and each candidate type of the multiple candidate types and its corresponding multiple candidate quantization sequences. For the second device, the quantization scheme may be presaved in the second device, or preconfigured on the second device, etc. Preferably, the second device may only save the second quantization information in the quantization scheme, each candidate type of the multiple candidate types and its corresponding multiple candidate quantization sequences. In addition, it should be noted that all the contents of the quantization scheme can also be preset in both the first device and the second device at the same time, and the quantization scheme is constructed based on the reception state of the second device.

Optionally, the second quantization information may include a quantization relationship table. The quantization relationship table includes: a candidate parameter value corresponding to each candidate quantization sequence of the multiple candidate quantization sequences, and a parameter range corresponding to each candidate parameter value of multiple candidate parameter values. Here, a candidate parameter value corresponding to each parameter range may be a median value of the candidate parameter range.

Optionally, the second quantization information may include a second quantization calculation manner. An input of the second quantization calculation manner may include any one reception parameter, and an output may include a candidate quantization sequence corresponding to the any one reception parameter. Here, for example, the reception parameter is the received amplitude. The second quantization calculation manner can be expressed by a calculation formula. For example,

$$g\left(f\left(argmin_{q \in Q_k}|q - RSS_T^m|\right)\right) \quad . \quad \text{Where,}$$

$RSS_T^m$ is an m-th reception parameter (m is an integer), *argmin* represents a variable value when the objective function takes a minimum value, the variable is q, the objective function is $\left|q - RSS_T^m\right|$, the objective function represents a difference between the variable q and the m-th reception parameter, $Q_k$ represents a quantization reference set of the target second device, $q \in Q_k$ represents that the variable q is a median value of one parameter range in the set $Q_k$. The function f() is an index classifier, that is, an index of a parameter range corresponding to the input reception parameter can be obtained through the function f. The function g() is a Gray code encoder, and its output is a quantization sequence. In this example, its output is a received quantization sequence of the amplitude type.

Alternatively, the second quantization calculation manner includes an index determination calculation manner and a quantization calculation manner. An input of the index determination calculation manner may include any one reception parameter, and an output may be an index of a parameter range corresponding to the reception parameter. For example, in a case of the amplitude type, the index determination calculation manner may employ the above function

$$f\left(argmin_{q \in Q_k}|q - RSS_T^m|\right),$$ and the content is the same as the above example, and is not repeated. An input of the quantization calculation manner may be an index of a parameter range, and an output may include a candidate quantization sequence corresponding to the candidate parameter value. For example, in the case of the amplitude type, the quantization calculation manner may employ the above function g ( ), which is not repeated.

Furthermore, the quantization scheme may include different quantization schemes corresponding to different candidate types, and specific quantization schemes may include a phase quantization scheme, an amplitude quantization scheme, and an RSSI quantization scheme. The second quantization information also includes second phase quantization information, second amplitude quantization information, and second RSSI quantization information. The candidate amplitude type and its corresponding candidate quantization sequences, and the second amplitude quantization information are stored in the amplitude quantization scheme. The candidate phase type and its corresponding candidate quantization sequences, and the second phase quantization information are stored in the amplitude quantization scheme. The candidate RSSI type and its corresponding candidate quantization sequence, and the second RSSI quantization information are stored in the RSSI quantization scheme.

The contents of the second phase quantization information, the second amplitude quantization information and the second RSSI quantization information are similar to those in the examples of the second quantization information, with the only difference being the additional type. For example, the second amplitude quantization information may include an amplitude quantization relationship table. Specifically, the amplitude quantization relationship table includes a candidate amplitude value corresponding to each candidate amplitude quantization sequence of the multiple candidate amplitude quantization sequences, and a parameter range corresponding to each candidate amplitude value of multiple candidate amplitude values. Alternatively, the second amplitude quantization information includes a second amplitude quantization calculation manner, its input is the received amplitude, and its output is a candidate quantization sequence of the amplitude type. The contents of the second phase quantization information and the second RSSI quantization information are similar to those of the second amplitude quantization information, with the only difference being the type. Therefore, they are not repeated.

Taking the received amplitude of the i-th response signal and the second amplitude quantization information as an example, the second device determining the i-th received quantization sequence of the amplitude type based on the received amplitude of the i-th response signal and the second amplitude quantization information, may include: the second device determining an i-th target amplitude range corresponding to the received amplitude of the i-th response signal based on multiple amplitude ranges in the second amplitude quantization information, determining a target amplitude value corresponding to the i-th target amplitude range based on a candidate parameter value corresponding to each amplitude range in the second amplitude quantization information, and determining an i-th received quantization sequence of the amplitude type corresponding to the target amplitude value based on a candidate quantization sequence corresponding to each candidate amplitude value in the second amplitude quantization information.

Alternatively, the second device determining the i-th received quantization sequence of the amplitude type based on the received amplitude of the i-th response signal and the second amplitude quantization information, may include: the second device inputting the received amplitude of the i-th response signal into the second amplitude quantization calculation manner in the second amplitude quantization information to obtain the i-th received quantization sequence of the amplitude type output by the second amplitude quantization calculation manner.

The second device determines the i-th received quantization sequence of the phase type based on the received phase of the i-th response signal and the second phase quantization information, and the second device determines the i-th received quantization sequence of the RSSI type based on the RSSI and the second RSSI quantization information in the reception parameters of the i-th response signal. These processing are similar to the processing of the amplitude type and will not be repeated.

The second device generating the i-th second quantization sequence based on the i-th received quantization sequence of each type, may include: in a case where the i-th response signal corresponds to an i-th received quantization sequence of only one type, the second device uses the i-th received quantization sequence of the type as the i-th second quantization sequence; in a case where the i-th response signal corresponds to an i-th received quantization sequence of each type of multiple types, the second device generates the i-th second quantization sequence based on the i-th received quantization sequence of each type.

The second device generating the i-th second quantization sequence based on the i-th received quantization sequence of each type, may include one of: the second device concatenating the i-th received quantization sequence of each type based on a first specified order to obtain the i-th second quantization sequence; the second device calculating the i-th received quantization sequence of each type based on a third manner to obtain the i-th second quantization sequence.

The description of the first specified order and the third manner is the same as that of the above embodiment and will not be repeated.

The above description is given merely by taking an example in which the second device generates or obtains the second quantization sequence at any one time. In actual processing, the second device ultimately needs to obtain multiple second quantization sequences. The generation manner of each second quantization sequence, or type(s) of the received quantization sequence(s) corresponding to each second quantization sequence can be the same or different. The second device receives any response signal. The manner in which the second device determines the type(s) of the received quantization sequence(s) may be the same as the manner in which the first device determines the type(s) corresponding to the first quantization sequence mentioned in the above embodiment. For example, the first device and the second device default to or are preconfigured with the same one or more types for the quantization sequences (first quantization sequences or second quantization sequences) corresponding to all response signals. Alternatively, each response signal of the multiple response signals may have a first correspondence with the types for generating the quantization sequence, and the first correspondence is used for the first device to determine the type of the initial quantization sequence for generating the first quantization sequence corresponding to each response signal, and the first correspondence is used for the second device to determine the type of the received quantization sequence for generating the second quantization sequence corresponding to each response signal. The relevant descriptions of the above contents have been described in detail in the above embodiments and will not be repeated here.

It should be understood that although the second device may only need to perform one or more types of quantization processing on a certain response information, the second device can measure all the contents of the received amplitude, received phase and RSSI of the response signal. However, all measurements may be not use for quantization processing. Alternatively, the second device may only obtain measurements of a type that is needed this time. For example, when the second device generates the i-th second quantization sequence based on the i-th response signal, it can be determined based on the above manner that only the received quantization sequence of the amplitude type needs to be obtained. In this case, the second device may only measure the received amplitude of the i-th response signal. All possible situations are not exhaustive here.

In some embodiments, the second device may use the same type of received quantization sequence each time to generate each second quantization sequence. For example, the second device uses the received quantization sequence of the amplitude type as the second quantization sequence each time; or, the second device uses the received quantization sequence of the phase type as the second quantization sequence each time; or, the second device uses the received quantization sequence of the amplitude type and the received quantization sequence of the phase type to generate the second quantization sequence each time. That is, the second device uses the same type of received quantization sequence each time and uses the same processing manner to obtain the second quantization sequence, and finally obtains multiple second quantization sequences. All possibilities are not exhaustive here. It should be understood that the second device and the first device should use the same type rule to generate the first quantization sequence and the corresponding second quantization sequence.

In some embodiments, the second device can determine one or more types of received quantization sequences to be obtained at an i-th time based on the first correspondence, and calculate an i-th received quantization sequence of each type of the one or more types; and determine a generation manner for the i-th second quantization sequence, and use the generation manner to generate the i-th second quantization sequence based on the i-th received quantization sequence of each type.

In some possible implementations, the multiple response signals are transmitted in one or more groups. This implementation is particularly applicable to a scenario where the first device has multiple antennas.

In this embodiment, each group of response signals includes one or more response signals, and different groups of response signals occupy different time domain ranges. Different response signals of the one or more response signals correspond to different antennas. That is, the number of response signals included in any group of response signals may be less than or equal to the number of antennas.

The first device determining the multiple groups of transmission parameters based on the multiple groups of parameter values and the radio frequency coefficient, includes the first device calculating multiple radio frequency sub-coefficients based on the radio frequency coefficient. The first device has multiple antennas, and different radio frequency sub-coefficients of the multiple radio frequency sub-coefficients correspond to different antennas of the first device. The first device determines the multiple groups of transmission parameters corresponding to each group of response signals of the multiple groups of response signals based on the multiple groups of parameter values and the multiple radio frequency sub-coefficients. Each group of response signals includes one or more response signals, different groups of response signals occupy different time domain ranges, and different response signals of the one or more response signals correspond to different antennas.

In this embodiment, the calculation manner of the radio frequency coefficient is the same as that of the above embodiment. The first device calculating the multiple radio frequency sub-coefficients based on the radio frequency coefficient may mean that the first device calculates a radio frequency sub-coefficient corresponding to each antenna of the multiple antennas based on the radio frequency coefficient.

For example, assuming that the first device has N antennas, the calculation manner of the radio frequency coefficient $W_R$ is the same as that in the previous embodiment, and is not repeated. For example, the radio frequency coefficient can be expressed by the following formula: $W_R = \begin{bmatrix} \dfrac{1}{\hat{H}_1} \\ \vdots \\ \dfrac{1}{\hat{H}_N} \end{bmatrix}$ . Accordingly, a radio frequency sub-coefficient corresponding to any antenna, such as an n-th antenna, can be expressed as $W_{R,n} = \begin{bmatrix} \dfrac{1}{\hat{H}_n} \end{bmatrix}$ , where n is a positive integer, and n is less than or equal to N.

In this embodiment, the radio frequency sub-coefficient corresponding to each antenna is calculated or generated using an inverse of a channel estimation value corresponding to the antenna. Accordingly, each radio frequency sub-coefficient can be used to offset channel characteristics corresponding to the antenna (such as to offset transmission attenuation or transmission loss of a signal in the channel), so that the signal transmitted to the corresponding second device in the channel is the same or substantially the same as the signal transmitted by the first device. All possible roles or functions of the radio frequency coefficient are not exhaustive here. It should be understood that different response signals correspond to different antennas, and different antennas correspond to different radio frequency sub-coefficients. Therefore, the radio frequency sub-coefficient corresponding to the response signal mentioned below may refer to the radio frequency sub-coefficient of the antenna corresponding to the response signal, which will not be repeated below.

The first device determining multiple groups of transmission parameters corresponding to each group of response signals of the multiple groups of response signals based on the multiple groups of parameter values and the multiple radio frequency sub-coefficients, includes: the first device determining a j-th group of transmission parameters corresponding to a j-th group of response signals based on multiple groups of parameter values corresponding to the j-th group of response signals and a radio frequency sub-coefficient corresponding to each response signal of the j-th group of response signals. The j-th group of response signals is one of the multiple groups of response signals, and j is an integer.

The first device determining the j-th group of transmission parameters corresponding to the j-th group of response signals based on the multiple groups of parameter values corresponding to the j-th group of response signals and the radio frequency sub-coefficient corresponding to each response signal of the j-th group of response signals, may include: the first device determining an n-th group of transmission parameters in the j-th group of transmission parameters corresponding to the j-th group of response signals based on a group of parameter values corresponding to an n-th response signal in the j-th group of response signals and a radio frequency sub-coefficient corresponding to the n-th response signal.

The first device determining the n-th group of transmission parameters in the j-th group of transmission parameters corresponding to the j-th group of response signals based on the group of parameter values corresponding to the n-th response signal in the j-th group of response signals and the radio frequency sub-coefficient corresponding to the n-th response signal, may include: the first device determining an n-th group of predicted parameters based on the group of parameter values corresponding to the n-th response signal in the j-th group of response signals, and the first device using the n-th group of predicted parameters and the radio frequency sub-coefficient corresponding to the n-th response signal as the n-th group of transmission parameters in the j-th group of transmission parameters corresponding to the j-th group of response signals.

The method for determining the n-th group of predicted parameters is the same as the method for the first device to determine the i-th group of predicted parameters in the scheme using the radio frequency coefficient in the above embodiment, and will not be repeated.

The first device transmitting the multiple response signals to the second device based on the multiple groups of transmission parameters, includes: the first device transmitting the j-th group of response signals to the second device based on the j-th group of transmission parameters corresponding to the j-th group of response signals. Specifically, the first device transmitting the j-th group of response signals to the second device based on the j-th group of transmission parameters corresponding to the j-th group of response signals may mean that different antennas of the N antennas of the first device transmit different response signals in the j-th group of response signals to the second device based on transmission parameters corresponding to the response signals in the j-th group of response signals. That is, if the first device intends to transmit M response signals, it can transmit them (M/N) times in total. One group of response signals is transmitted each time. One group of response signals can include N response signals. M can be greater than N, and M is a positive integer.

For example, assuming that the n-th response signal is a third pilot signal with a length of L ($X_n = diag$ ($x_1n, ..., x_{Ln}$)), the n-th response signal transmitted using the radio frequency sub-coefficient $W_{R,n}$ can be expressed as $X_{R,n} = [\frac{x_{1n}}{\bar{H}_n} ... \frac{x_{Ln}}{\bar{H}_n}]$ . The n-th response signal may be a response signal processed based on the transmission phase and/or transmitted power, which is not illustrated in the formula for the sake of simplicity.

Different response signals in the j-th group of response signals are different third pilot signals. The different third pilot signals can be calculated based on the first pilot key and different generation parameters. The different generation parameters corresponding to different third pilot signals can be preset by both the first device and the second device. That is, the first device and the third device can both know in advance which response signal is generated using which generation parameter. Alternatively, each third pilot signal may be preset by both the first device and the second device. As long as different response signals correspond to different third pilot signals, it is within the protection scope of this embodiment.

In this case, the second device receiving the multiple response signals from the first device, includes: the second device receiving the multiple groups of response signals from the first device. Each group of response signals of the multiple groups of response signals includes one or more response signals, and different groups of response signals occupy different time domain ranges.

That is, the second device will receive one group of response signals at a time, and this group of response signals can be distinguished through different third pilot signals. For example, the second device receives N response signals at a time, and the n-th response signal is represented as

$$\hat{y}_{T,n} = H'_{1R,T}W_{1R} * X_{R,n} = X_{R,n} .$$

Through this processing, the loss of each response signal received by the second device in each corresponding channel has been offset through the radio frequency sub-coefficient used by the first device. Therefore, the second device can directly measure at least one of the received phase, received amplitude, or RSSI for each response signal, and can use different pilot signals to distinguish different response signals. The second device then perform subsequent processing to generate multiple second quantization sequences and generate a second key. The process of the second device generating the multiple second quantization sequences and generating the second key is the same as that in the above embodiment and will not be repeated. By employing the above manner, the second device can reduce the number of reception times, because N second quantization sequences can be obtained in one reception. As a result, the efficiency of the key generation may be high.

In some possible implementations, after the second device generates the second key, the method may further include: the second device calculating a first verification code based on the second key; and the second device transmitting a key confirmation request message to the first device. The key confirmation request message carries the first verification code, and the first verification code is used for the first device to verify key consistency.

The second key generated by the second device and the first key generated by the first device can be physical layer keys between the two devices. Since the two devices generate their own physical layer keys respectively, key consistency verification (or key consistency check) needs to be performed to ensure that the two devices subsequently use the same physical layer key as a pairwise key for communication.

In one embodiment, the second device calculating a first verification code based on the second key, may mean that the second device calculates the first verification code based on the second key and a fourth parameter using a fourth manner.

The fourth manner may include at least one of: a Key derivation function (KDF), a key derivation function, a first authentication function (which, for example, can be expressed as f1), a second authentication function (which for example can be expressed as f2), a third key generation function (which for example can be expressed as f3), a fourth key generation function (which for example can be expressed as f4), a fifth key generation function (which for example can be expressed as f5), or the like.

The fourth parameter may include at least one of: a fourth random number, a length of the fourth random number, a second specified value, an identifier of the second device, or a length of the identifier of the second device. The second specified value may be set according to actual conditions. The second specified value may be a fixed value (or a second fixed value) assigned by a third party. Exemplarily, the second specified value may be expressed as FC, and its value may be FC=0x7E. This is merely an exemplary description. In actual processing, the specific value of the second specified value may also be other values, which are not exhaustive here. The fourth random number may be predefined, determined by the first device, or indicated by the second device. If the fourth random number is predefined, the first device and the second device need to predefine the same fourth random number. If the fourth random number is determined by the first device, the first device may further transmit the fourth random number to the second device. This embodiment does not limit a time at which the first device transmits the fourth random number or a message carrying the fourth random number. As long as it is before the second device calculates the first verification code, it is within the protection scope of this embodiment. If the fourth random number is indicated by the second device, the second device may further transmit the fourth random number to the first device. This embodiment does not limit a time at which the second device transmits the fourth random number or a message carrying the fourth random number. As long as it is before the first device verifies the first verification code, it is within the protection scope of this embodiment.

In some possible embodiments, the key confirmation request message further carries ciphertext data. The second device calculating the first verification code based on the second key, includes: the second device calculating the first verification code and the ciphertext data based on the second key and plaintext data.

The second device calculating the first verification code and the ciphertext data based on the second key and the plaintext data, may mean that the second device calculates the first verification code and the ciphertext data based on the second key and the plaintext data using the fifth manner.

The fifth manner may be a specified encryption calculation manner. For example, the fifth manner may be an ASCON algorithm, or an ASCON-authenticated encryption with associated data (AEAD) algorithm. Taking the ASCON-AEAD algorithm as an example, the ASCON-AEAD algorithm includes two parts, i.e., encryption and decryption. Processes and structures of the two parts are the same, and the only difference is that the input and output of plaintext and ciphertext are reversed. The fifth manner in this embodiment can be specifically the encryption part in the ASCON-AEAD algorithm. That is, the second device uses the encryption part in the ASCON-AEAD algorithm based on the second key and the plaintext data to calculate the ciphertext data and the first verification code. Exemplarily, the ciphertext data may be represented as C, and the first verification code may be represented as T. In this example, T represents an authentication tag.

The plaintext data may refer to service data.

Exemplarily, the second device calculating the first verification code and the ciphertext data based on the second key and the plaintext data using the fifth manner, may include: the second device calculating the first verification code and the ciphertext data based on the second key, the plaintext data and a fifth parameter using the fifth manner. The fifth parameter may include at least one of: an identifier of the first device, an identifier of the second device, a service type indicator, an identifier of the first network device, a fourth random number, a serial number, or the shared key. If at least one of the identifier of the first device, the identifier of the second device, the service type indicator, or the identifier of the first network device is added to the fifth parameter, the first verification code can also be used for the first device to authenticate the second device. If at least one of the fourth random number, the serial number, or the shared key is added to the fifth parameter, it can further be used to prevent replay.

In some possible implementations, the processing by the first device may further include: the first device receiving a key confirmation request message from the second device, where the key confirmation request message carries a first verification code, and the first verification code is calculated by the second device based on the second key; and the first device verifies key consistency based on the first key and the first verification code.

In some embodiments, the first device verifying the key consistency based on the first key and the first verification code, may include: the first device calculating a second verification code based on the first key; and the first device verifying the key consistency based on the second verification code and the first verification code.

Optionally, the first device calculating the second verification code based on the first key may include: the first device calculating the second verification code based on the first key and a fourth parameter using a fourth manner. The description of the fourth manner and the fourth parameter is the same as that in the aforementioned embodiment. The specific description of the method of calculating the second verification code based on the first key and the fourth parameter using the fourth method is the same as the specific description of the second device calculating the first verification code based on the second key and the fourth parameter using the fourth manner, and will not be repeated here.

Optionally, the key confirmation request message further carries the ciphertext data. The first device calculating the second verification code based on the first key, includes: the first device calculating the second verification code and the plaintext data based on the first key, the ciphertext data and the first verification code.

The first device calculating the second verification code and the plaintext data based on the first key, the ciphertext data and the first verification code, may include: the first device calculating the second verification code and the plaintext data based on the first key, the ciphertext data and the first verification code using a fifth manner. The fifth manner may be a specified encryption calculation manner. For example, the fifth manner may be an ASCON algorithm or an ASCON-AEAD algorithm. Taking the ASCON-AEAD algorithm as an example, the ASCON-AEAD algorithm includes two parts, i.e., encryption and decryption. The processes and structures of the two parts are the same, and the only difference is that the input and output of plaintext and ciphertext are reversed. The fifth manner in this embodiment can be specifically the decryption part in the ASCON-AEAD algorithm. That is, the first device uses the decryption part in the ASCON-AEAD algorithm to calculate the second verification code and the plaintext data based on the first key, the ciphertext data and the first verification code. Exemplarily, the ciphertext data may be represented as C, the first verification code may be represented as T, and the second verification code may be represented as T'.

Exemplarily, the first device calculating the second verification code and the plaintext data based on the first key, the ciphertext data and the first verification code using the fifth manner, may include: the first device calculating the second verification code and the plaintext data based on the first key, the ciphertext data, the first verification code and the fifth parameter using the fifth manner. The description of the fifth parameter is the same as that in the above embodiment and will not be repeated here.

The first device verifying the key consistency based on the second verification code and the first verification code, may include one of: the first device determining that the key consistency verification succeeds when the second verification code is the same as the first verification code; the first device determining that the key consistency verification fails when the second verification code is different from the first verification code. Here, the key consistency verification success or failure means that the first device determines that the consistency verification of the first key generated by itself and the second key generated by the second device succeeds or fails.

It should also be noted that, in the above process, when the first device determines that the key consistency verification succeeds, the process may further include: the first device transmitting a key confirmation response message to the second device. Correspondingly, the second device may further receive a key confirmation response message from the first device. The key confirmation response message may carry service data.

Optionally, the key confirmation response message may carry encrypted service data. The encrypted service data may be encrypted based on the first key; or, the encrypted service data may also be encrypted based on an encryption key derived from the first key. This embodiment does not limit the manner in which the encryption key is derived from the first key.

After receiving the key confirmation response message, the second device can obtain the encrypted service data. The second device may decrypt the encrypted service data based on the second key to obtain the service data; or the second device may decrypt the encrypted service data based on an encryption key derived from the second key to obtain the service data.

In some possible implementations, the processing by the first device may further include: the first device transmitting a pilot key update message to the second device; and the first device receiving a pilot key update response message from the second device. The pilot key update response message is used to indicate that the second device has obtained the second pilot key.

The first device transmitting the pilot key update message to the second device may specifically include: when the first device determines that key consistency verification succeeds, the first device transmitting the pilot key update message to the second device.

The pilot key update message carries a second random number; and the method further includes: the first device calculating the second pilot key based on a third key and a second parameter. The second parameter includes at least one of: the second random number, a length of the second random number, an identifier of the second device, a length of the identifier of the second device, a serial number, a length of the serial number, or a first specified value. The third key includes one of the first key and the first pilot key.

The second random number may be generated by the first device. This embodiment does not limit the method for generating the second random number.

In this embodiment, since the first pilot key is shared between the first device and the second device, and the first device will transmit the pilot key update message only when the key consistency verification succeeds. The first key and the second key are the same or are pairwise keys of each other. Therefore, the first device can use the first key to calculate the second pilot key obtained through update, or use the first pilot key to calculate the second pilot key obtained through update.

The method for generating the serial number is not limited in this embodiment. As long as the first device and the second device use the same serial number when calculating the second pilot key this time, it is within the protection scope of this embodiment.

The first specified value can be set according to actual conditions. The first specified value may be a fixed value (or a first fixed value) assigned by a third party. The first specified value may be the same as or different from the second specified value. For example, the first specified value may be expressed as FC, and its value may be FC=0x7E. This is only an exemplary explanation. In actual processing, the specific value of the first specified value may also be other values, which are not exhaustive here.

The calculation manner used to calculate the second pilot key may include at least one of: KDF, a first authentication function (which for example can be expressed as f1), a second authentication function (which for example can be expressed as f2), a third key generation function (which for example can be expressed as f3), a fourth key generation function (which for example can be expressed as f4), a fifth key generation function (which for example can be expressed as f5), an advanced encryption standard (AES), a snow third generation (SNOW 3G), ZUChongzhi (ZUC), XOR operation, concatenation operation, or the like.

The first device calculating the time of processing the second pilot key based on the third key and the second parameter may be after the first device receives the pilot key update response message from the second device, or after the first device transmits the pilot key update message to the second device. This embodiment does not limit or exhaust them.

Correspondingly, in the processing of the second device, the method further includes: the second device receiving the pilot key update message; the second device calculating a second pilot key; and the second device transmitting a pilot key update response message. The pilot key update response message is used to indicate that the second device has obtained the second pilot key.

The second device receiving the pilot key update message may mean that the second device receives the pilot key update message from the first device. The second device transmitting the pilot key update response message may mean that the second device transmits the pilot key update response message to the first device.

The pilot key update message carries a second random number. The second device calculating the second pilot key, includes: the second device calculating the second pilot key based on a fourth key and a second parameter. The second parameter includes at least one of the second random number, a length of the second random number, an identifier of the second device, a length of the identifier of the second device, a serial number, a length of the serial number, or a first specified value. The fourth key includes one of the second key and the first pilot key.

The calculation manner used by the second device to calculate the second pilot key should be the same as the calculation manner used by the first device to calculate the second pilot key, which is not repeated.

After completing the above processing, the first device and the second device both obtain the second pilot key obtained through update. Both parties can use the second pilot key as a new first pilot key, and then perform the above processing again based on the new first pilot key to generate a new first key and a new second key, thereby realizing the update of the pairwise key of the first device and the second device, which will not be repeated here.

In some possible implementations, the first device, the second device, and the first network device jointly implement the key generation method provided in this embodiment.

In this implementation, the first device may receive a first pilot key from a first network device. Correspondingly, the processing by the first network device may include: transmitting the first pilot key to the first device.

The manner in which the first network device generates the first pilot key may include: the first network device calculating the first pilot key based on a shared key. The shared key is shared between the first network device and the second device.

The first network device calculating the first pilot key based on the shared key may mean that the first network device calculates the first pilot key based on the shared key and a seventh parameter using a seventh manner. The seventh manner may include at least one of: KDF, a third key generation function, a fourth key generation function, a fifth key generation function, or the like, which is not exhaustive here.

The shared key may include any one of a root key, an integrity key (IK), an encryption key (CK), an anonymity key (AK), a key in AUSF (KAUSF), a key in SEAF (KSEAF), and the like. The seventh parameter may include at least one of an identifier of the second device, a length of the identifier of the second device, a fifth random number, a length of the fifth random number, a fixed value, an identifier of the first device, a length of the identifier of the first device, an identifier of the first network device, a length of the identifier of the first network device, or the like. All types that may be included in the seventh parameter are not exhaustive here. The method for obtaining the fifth random number is not limited in this embodiment. As long as the first network device and the second device can both obtain the same fifth random number, it is within the protection scope of this embodiment.

The processing by the first network device may further include: the first network device transmitting first quantization information to the first device. The first quantization information is used to determine a candidate parameter value corresponding to each candidate quantization sequence of one or more candidate quantization sequences, and a parameter range corresponding to each candidate parameter value of one or more candidate parameter values. That is, the quantization scheme is preconfigured or predefined in the second device and the first network device. The first network device can transmit the quantization scheme to the first device when it is determined that the quantization scheme is not saved in the first device, so that the first device obtains the same quantization scheme as the second device. The description of the quantization scheme and the first quantization information is the same as that in the above embodiment and will not be repeated.

After the first device receives the first pilot key, the processing in the above embodiment may be performed. Specifically, the first device transmits a first message to the second device. Correspondingly, the second device receives the first message from the first device. The description of the first message is the same as that in the above embodiment and will not be repeated. Then the second device transmits the first pilot signal to the first device for processing. It should be noted that, in this embodiment, before transmitting the first pilot signal, the second device needs to derive the first pilot key based on the shared key. Specifically, the second device calculates the first pilot key based on the shared key, and the shared key is shared between the second device and the first network device. The manner in which the second device calculates the first pilot key should be the same as the manner in which the first network device calculates the first pilot key, so that the second device and the first device use the same first pilot key.

After the second device transmits the first pilot signal, until the first device and the second device complete the key consistency verification, the description is the same as that in the above embodiment and will not be repeated here.

In some embodiments, when the first device determines that the key consistency verification succeeds, the method may further include: the first device transmitting the first key to the first network device. Correspondingly, in the processing by the first network device, the method further includes: the first network device receiving the first key transmitted by the first device. In this way, the first network device can obtain the first key from the first device, which is used for subsequent mobility management. The subsequent processing is not limited here.

In some embodiments, when the first device determines that the key consistency verification succeeds, the first device and the second device may further perform pilot key update processing. The specific processing method is the same as that in the above embodiment and will not be repeated.

In some embodiments, after the first device transmits the first key to the first network device, the first network device may trigger a pilot key update process.

In the processing by the first network device, the method further includes: the first network device transmitting a pilot key update message; and the first network device receiving a pilot key update response message. The pilot key update response message is used to indicate that the second device has obtained a second pilot key. Correspondingly, the processing by the second device may further include: the second device receiving the pilot key update message; and the second device calculating a second pilot key; and the second device transmitting a pilot key update response message. The pilot key update response message is used to indicate the second device has obtained the second pilot key.

In this embodiment, the first network device transmitting the pilot key update message may mean that the first network device transmits the pilot key update message to the second device. The second device receiving the pilot key update message means that the second device receives the pilot key update message transmitted by the first network device. Similarly, the first network device receiving the pilot key update response message means that the first network device receives the pilot key update response message from the second device. The second device transmitting the pilot key update response message means that the second device transmits the pilot key update response message to the first network device.

The manner in which the second device calculates the second pilot key is the same as that in the above embodiment and will not be repeated.

In this embodiment, the processing by the first network device may include: the first network device calculating the second pilot key based on a third key and a second parameter. The second parameter includes at least one of a second random number, a length of the second random number, an identifier of the second device, a length of the identifier of the second device, a serial number, a length of the serial number, or a first specified value. The third key includes one of the first key and the first pilot key. The specific description of the first network device calculating the second pilot key is the same as that in the above embodiment and will not be repeated here.

Furthermore, after calculating the second pilot key, the first network device may use the second pilot key as a new first pilot key and transmit the new first pilot key to the first device, and then repeat the above process, which will not be repeated.

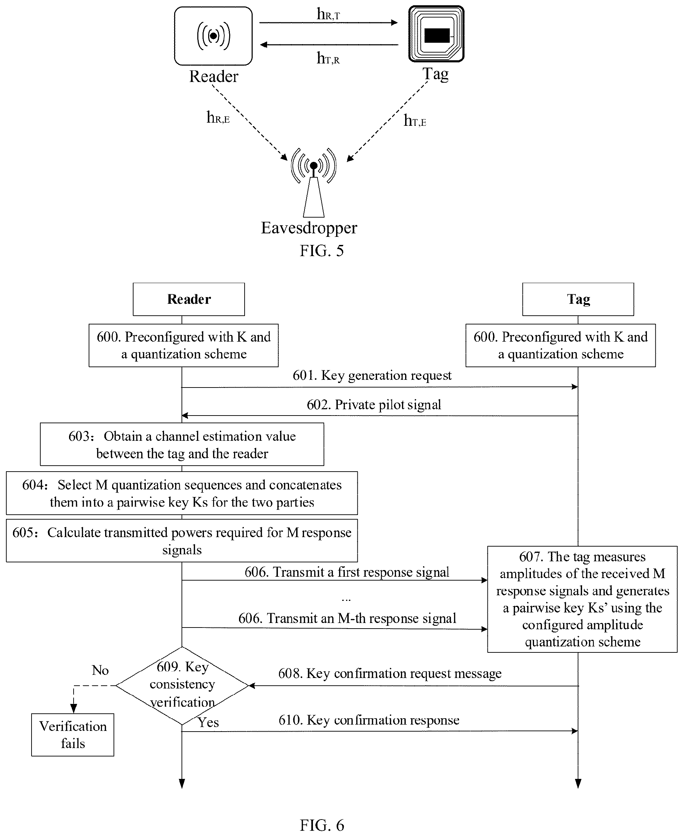

With reference to FIG. 5, an exemplary description is provided for a system composition architecture that only includes the first device and the second device. For example, in FIG. 5, the first device is a reader and the second device is a tag. The reader transmits a sinusoidal continuous waveform (CW) to power the tag. The tag collects and stores energy. After a period of time, when the collected energy meets an operating threshold, the tag transmits an information signal to the reader through an active transmitter. At this time, there is an illegal user (an eavesdropper in FIG. 5, which can be represented as Eve) who may eavesdrop on a key generation process between the reader and the tag, launch attacks such as man-in-the-middle forwarding. It is assumed that $h_{R,T}$, $h_{T,R}$, $h_{R,E}$, $h_{T,E}$, are small-scale channel fading coefficients from the reader to the tag, form the tag to the reader, from the reader to the Eve, and from the Tag to the Eve, respectively. It is assumed that the wireless channel satisfies reciprocity. Therefore, within a coherence time, $h_{R,T} = h_{T,R}$.

A pilot signal transmitted by the reader is $x_R$, a signal received by the Tag is $y_{R,T} = h_{R,T}\sqrt{P_R}x_R\sqrt{PL_{R,T}} + n_T$ , and a signal received by the Eve is $y_{R,E} = h_{R,E}\sqrt{P_R}x_R\sqrt{PL_{R,E}} + n_E$ , where $P_R$ is transmitted power of the reader, and $PL_{R,T}$ and $PL_{R,E}$ are large-scale fading, $n_T$ is Gaussian noise at the tag side, and $n_E$ is Gaussian noise at the eavesdropper side. Therefore, $y_{R,T}$ and $y_{R,E}$ are complex Gaussian random variables, which can be expressed as $A + Bi$; and their amplitudes are $\sqrt{A^2 + B^2}$ and their phases are $\varnothing = arg(A + Bi) = tan^{-1}(A/B)$.

With reference to FIG. 6, the key generation method provided in the above embodiments is exemplarily described by taking an example in which the first device is a reader and the second device is a tag.

In step 600, a reader and a tag are preconfigured with a same root key K and a same quantization scheme.

Here, the quantization scheme is a multi-bit quantization scheme. That is, the number of bits of each quantization sequence is multiple bits.

The quantization scheme may include at least one of an amplitude quantization scheme, a phase quantization scheme, or an RSSI quantization scheme. This example mainly employs the amplitude quantization scheme. Therefore, taking the RSS (representing the amplitude) measured at the tag side as an example, a generation or construction method of the amplitude quantization scheme is exemplarily described.

It is assumed that a transmitted power range of the reader is $[P_R^{min}, P_R^{max}]$ ( $P_R^{min}$ represents minimum transmitted power, $P_R^{max}$ represents maximum transmitted power), and a received power range of the tag (for a signal from the reader) is $[P_T^{min}, P_T^{max}]$, where $P_T^{min}$ represents minimum received power and $P_T^{max}$ represents maximum received power. The received signal power and the transmitted signal power satisfy a signal propagation attenuation formula. A b-bit quantization scheme is considered, where b is an integer greater than or equal to 2. A quantization range is $Q_k = \{q_1, q_2,..., q_k\}$, where $k = 2^b$, k elements in $Q_k$ (i.e., k q values) are equally spaced, and a value of each element q is a median value of each quantization interval. The received power range of the tag $[P_T^{min}, P_T^{max}]$ is a subset of the quantization range $Q_k$. That is, each tag measurement value can find a corresponding quantization interval. Therefore, for an actual amplitude measurement $RSS_T^m$ at the tag side, the tag selects a quantization value with a smallest absolute value of a difference from $RSS_T^m$. That is, $argmin_{q \in Q_k}|q - RSS_T^m|$.

An index classifier $f(q_k) = k$ is defined, where its input is a sample value obtained by $\{argmin_{q \in Q_k}|q - RSS_T^m|\}$ and its output is an index of a quantization region to which the sample value belongs. $g\{x\}$ is defined as a Gray code encoder, where its input is the output $k$ of the classifier $f(q_k)$ and its output is a Gray code corresponding to the integer k. The Gray code can be used as a quantization sequence. Therefore, the quantization sequence of the tag can be calculated using the following formula:

$$g\left(f\left(argmin_{q \in Q_k}|q - RSS_T^m|\right)\right).$$

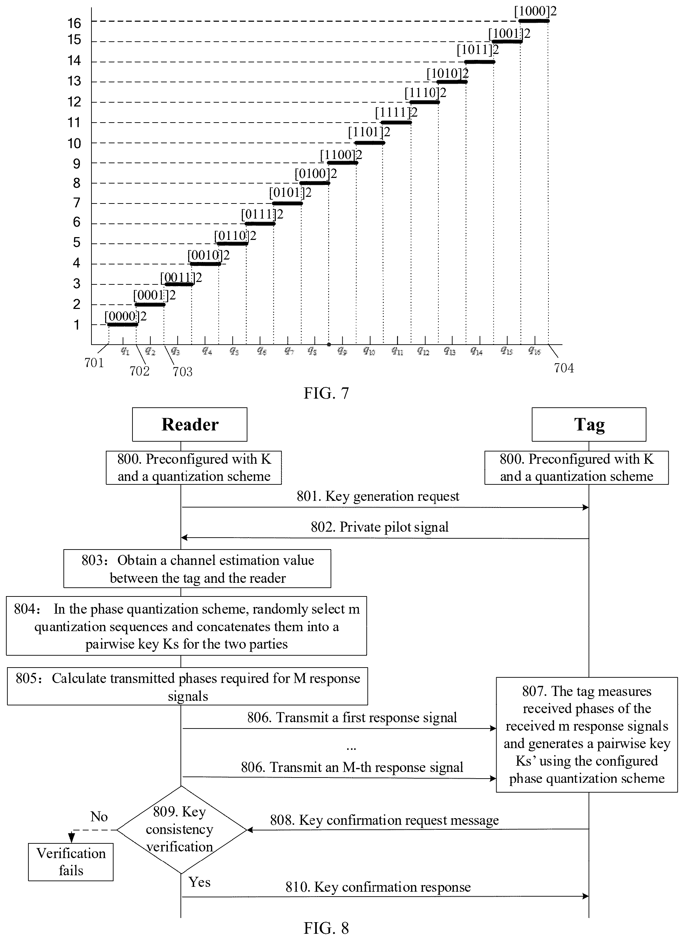

It is assumed that b = 4, m = 32, *KeyLen* = 128, and the quantization scheme is $Q_k = \{q_1, q_1, ..., q_k\}$. As shown in FIG. 7, a horizontal axis in FIG. 7 represents the candidate quantization reference value, a leftmost point 701 on the horizontal axis represents the minimum received power, and a last point 704 on the horizontal axis represents the maximum received power. It is assumed that 701~702 represent a first amplitude range, and 702~703 represent a second amplitude range. It can be seen that the first range and the second range have the same size. That is, a difference between the maximum and minimum values of the two ranges is the same, and other ranges are not described in detail. $q_1$ is a median value of the first amplitude range, $q_1$ is a first candidate amplitude value, and so on. $q_2$~$q_{16}$ are a second candidate amplitude value to a 16-th candidate amplitude value, respectively, and are also median values of their respective ranges. As shown in FIG. 7, ranges between any adjacent candidate amplitude values are the same; each candidate amplitude value can correspond to one candidate quantization sequence. For example, $q_1$ corresponding to a candidate quantization sequence [0000]2, and [0000]2 is used to represent that a set of binary bit values is 0000.

The above describes the construction or derivation process of the amplitude quantization scheme. The contents of the amplitude quantization scheme preset at the reader and tag sides have been described in detail in the previous embodiments and will not be repeated here.

In step 601, the reader transmits a key generation request message 1 to the tag. The key generation request message1 is the first message in the above embodiments.

In step 602, after receiving the key generation request, the tag randomly transmits a private pilot signal $X_T$. The private pilot signal is the first pilot signal in the above embodiments.

The private pilot signal $x_T$ can be a pseudo-random number generated based on the first pilot key (such as the root key K in the above embodiments). For example, $x_T = PRNG(K,P)$, where PRNG is a pseudo-random number generator, P is an input parameter (such as a random number and its length, a first timestamp, a tag identifier (ID) and its length, a first count value). It can also be a hash generated based on the first pilot key K, such as $x_T = Hash(K, P)$. It can also be a lightweight MAC algorithm, such as $x_T = MAC (K, P)$.

In step 603, the reader generates a private pilot signal $x_R$ at the reader side using the first pilot key K, performs channel estimation on the received private pilot signal $x_T$, and obtains a channel estimation value $h'_{R,T}$ between the tag and the reader. The private pilot signal at the reader side is the fourth pilot signal in the above embodiments.

In this step, the generation method of the private pilot $x_R$ at the reader side is the same as that at the tag side. The reader can use manners such as least squares and minimum mean square error for channel estimation, which are not limited in this example.

In step 604, the reader randomly selects M quantization sequences according to the quantization scheme and concatenates them into a pairwise key Ks for the two parties, where M is an integer greater than or equal to 2. The pairwise key Ks generated by the reader is the first key in the above embodiments. In this example, the M quantization sequences selected are M initial quantization sequences of the amplitude type. The M initial quantization sequences are directly used as M first quantization sequences and concatenated to obtain the first key (i.e., Ks).

In step 605, the reader calculates transmitted powers required for M response signals based on the channel estimation value and the selected quantization sequences to ensure that the tag receive the same (specified) amplitude. The transmitted power in this embodiment has the same concept as the transmitted power in the previous embodiments.

Here, a calculation manner of a transmitted power of any response signal (such as an m-th response signal, m being an integer greater than or equal to 1 and less than or equal to M) is as follows. The signal received by the tag is $y_{R,T} = \sqrt{P_R}\sqrt{PL_{R,T}}h_{R,T}x_R + n_T$. When a quantization value (amplitude value) corresponding to the initial quantization sequence of the amplitude type selected by the reader is $q_k$, that is, when the amplitude (or predicted received amplitude) of the m-th signal received by the tag is $q_k^m$, it can be calculated that

$$P_R^m = \frac{(q_k^m)^2}{(|x_R||h'_{R,T}|)^2 PL_{R,T}}.$$

In step 606, within the coherence time, the reader transmits M private pilot signals $x_R$ as M response signals to the tag using the calculated transmitted powers. A value of M is related to the length of the first key (and the second key). For example, if the length of the first key is 128 and the number of bits for one quantization is 4, M is equal to 32 (i.e., 128/4=32).

In step 607, the tag measures received amplitudes of the received M response signals and generates a pairwise key Ks' using the configured amplitude quantization scheme. The pairwise key Ks' generated by the tag is the second key in the aforementioned embodiments.

In step 608, the tag uses the generated pairwise key to transmit a key confirmation request message to the reader. This message can be a MAC message generated based on Ks (i.e., a message carrying a first verification code), and the input parameters include the pairwise key Ks', the tag ID, the length of the tag ID, the random number R, the length of the random number R, a fixed value assigned by a third party (such as FC=0x7E) and other parameters. The message can also be a message generated using the ASCON-AEAD algorithm, and input parameters of the algorithm include Ks' and service data, and the algorithm outputs ciphertext C and authentication information T (the authentication information being the first verification code), and the tag transmits the message to the reader.

In step 609, the reader uses the pairwise key Ks generated by itself to perform a key consistency verification on the key confirmation request message transmitted by the tag to determine whether the keys of the two parties are consistent. If the verification fails, a key generation failure message is transmitted and the key generation request command is re-performed, i.e., returning to step 601. If the verification succeeds, step 610 is performed.

It should be noted that if the message received by the reader is a MAC message, the reader uses its own pairwise key Ks to calculate the MAC value and verify integrity of the message. If the message received by the reader is an ASCON message, the reader, based on the Ascon-AEAD algorithm, uses the Ks, ciphertext C, and authentication information T as inputs, and outputs plaintext service data and verification information T'.

In step 610, the reader transmits a key confirmation response message to the tag. The message may be an encrypted message after a SMC is completed, such as an encrypted message generated based on Ks, i.e., $Encryption_{K_s}$(data), where data is the transmitted data.

In the example of FIG. 6, the amplitude quantization scheme may also be replaced by an RSSI quantization scheme. The related processing using the RSSI quantization scheme is the same as that in the above embodiments and will not be repeated.

With reference to FIG. 8, another exemplary description of the key generation method provided in the above embodiment is given by taking an example in which the first device is a reader and the second device is a tag.

In step 800, the reader and the tag are preconfigured with a root key K and a quantization scheme.

It should be noted that the quantization scheme is a multi-bit quantization scheme. The quantization scheme is described by taking the phase measured at the tag side as an example. The derivation or generation process of the phase quantization scheme is exemplarily described by taking the phase measured at the tag side as an example.

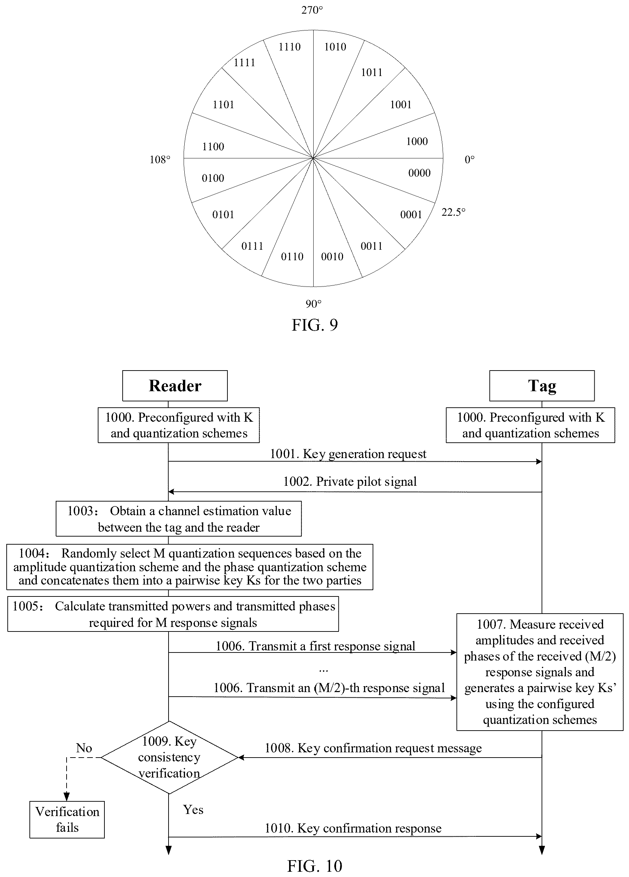

The main difference between the phase-based quantization scheme and the amplitude-based quantization scheme is that the quantization interval of the amplitude-based quantization scheme is the received power range of the tag $[P_T^{min}, \hat{P}_T^{max}]$, while the quantization interval of the phase-based quantization scheme is 0 to 360 degrees. It is assumed that b = 4, m = 32, *KeyLen* = 128m, and the quantization process of the phase quantization scheme $Q_k = \{q_1, q_1, ..., q_k\}$ is shown in FIG. 9. In FIG. 9, phase ranges are divided into 16 ranges with each range being 22.5 degrees. For example, 0 to 22.5 degrees is one phase range. For the sake of simplicity, FIG. 9 does not illustrate a median value of any phase range. Only candidate quantization sequences corresponding to various phase ranges are illustrated. For example, 0 to 22.5 degrees corresponds to candidate quantization sequence 0000.

The above describes the construction or derivation process of the phase quantization scheme. The contents of the phase quantization scheme preset at the reader and tag sides may be described in the above embodiments and will not be repeated here.

Steps 801 to 803 are the same as steps 601 to 603 in the above embodiment and are not described again.

In step 804, the reader randomly selects M quantization sequences based on the phase quantization scheme and concatenates them into the pairwise key Ks for the two parties. In this example, the M quantization sequences selected are M initial quantization sequences of the phase type. The M initial quantization sequences are directly used as M first quantization sequences and concatenated to obtain the first key (i.e., Ks).

In step 805, the reader calculates transmitted phases required for the M response signals based on the channel estimation value and the selected quantization sequences to ensure that the tag receives the same (specified) phase.

Here, the calculation manner for a transmitted phase of any response signal (such as an m-th response signal) is as follows. When a quantization value (i.e., phase value) corresponding to the initial quantization sequence of the phase type selected by the reader is $\varnothing_k$, that is, when a phase of the m-th signal received by the tag (i.e., predicted received phase) is $\hat{\varnothing}_k^m$, it can be calculated that $\varnothing_R^m = \hat{\varnothing}_k^m - \varnothing(h'_{R,T})$. Where, $\varnothing(h'_{R,T})$ is the phase of the estimated channel, and $\varnothing_R^m$ is the transmitted phase of the m-th response signal.

In step 806, within a coherence time, the reader transmits M private pilot signals as M response signals to the tag using the calculated phases, where the number m is related to the length of the key.

In step 807, the tag measures received phases of the received m response signals and generates a pairwise key Ks' (i.e., the second key in the above embodiments) using the configured phase quantization scheme.

The description of steps 808 to 810 is the same as that of steps 608 to 610 in the above embodiments and will not be repeated.

With reference to FIG. 10, another exemplary description of the key generation method provided in the above embodiment is given by taking an example in which the first device is a reader and the second device is a tag. In this embodiment, the pairwise key is generated by combining amplitude and phase. The tag measures an amplitude and phase of each received response signal and generates an amplitude-based quantization sequence and a phase-based quantization sequence respectively, and then concatenates them.

In step 1000, the reader and the tag are preconfigured with a same root key K and same quantization schemes. Here, the preconfigured quantization schemes include a quantization scheme for amplitude and a quantization scheme for phase. That is, this example requires a preconfigured amplitude quantization scheme and a preconfigured phase quantization scheme. In addition, in some possible cases, the preconfigured quantization schemes may include a phase quantization scheme, an amplitude quantization scheme, an RSSI quantization scheme, or the like. The relevant processing of adding the RSSI quantization scheme is the same as that in the above embodiments and will not be repeated.

Steps 1001 to 1003 are the same as steps 601 to 603 in the above embodiments and are not described again.

In step 1004, the reader randomly selects M quantization sequences based on the amplitude quantization scheme and the phase quantization scheme and concatenates them into a pairwise key Ks for the two parties. In this example, the selected M quantization sequences include M initial quantization sequences of the phase type and M initial quantization sequences of the amplitude type. An m-th initial quantization sequence of the phase type and an m-th initial quantization sequence of the amplitude type are concatenated to obtain an m-th first quantization sequence. This is repeated for M first quantization sequences, which are then concatenated to obtain the first key (i.e., Ks).

In step 1005, the reader calculates transmitted powers and transmitted phases required for M response signals based on the channel estimation value and the selected quantization sequences to ensure that the tag receives the same (specified) RSS and phase.

The specific calculation manner is the same as those of the step 605 and step 805, and will not be repeated.

In step 1006, within a coherence time, the reader transmits (M/2) private pilot signals $x_R$ as (M/2) response signals to the tag using the calculated transmitted powers and transmitted phases. The number M is related to the length of the key.

In step 1007, the tag measures received amplitudes and received phases of the received (M/2) response signals and generates a pairwise key Ks' using the configured quantization scheme. In this step, the tag measures an amplitude and phase of each received response signal, generates an amplitude-based quantization sequence and a phase-based quantization sequence respectively, and then concatenates them to form the key Ks'. Ks' is the second key in the above embodiments.

The description of steps 1008 to 1010 is the same as that of steps 608 to 610 in the above embodiments and will not be repeated.

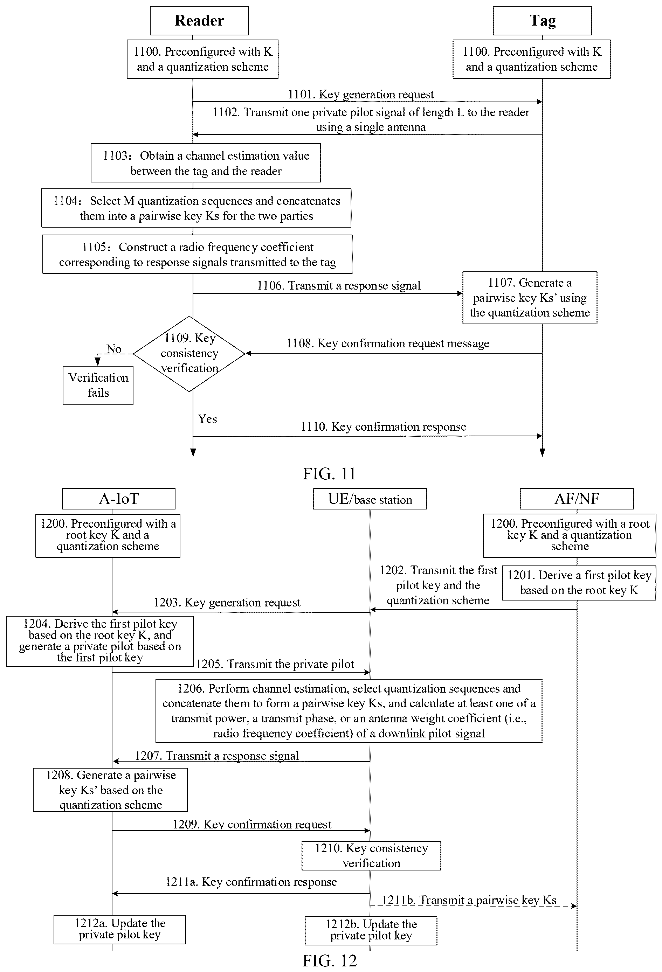

With reference to FIG. 11, yet another exemplary description of the key generation method provided in the above embodiment is given by taking an example in which the first device is a reader and the second device is a tag.

In this example, it is assumed that the reader is a multi-antenna device (such as a base station) with N antennas, and the tag is a single-antenna device. It is assumed that $H_{R,T}$, $H_{T,R}$, $H_{R,E}$, $H_{T,E}$ are small-scale channel fading coefficients (or channel estimate values) from the reader to the tag, from the tag to the reader, form the reader to the Eve (eavesdropper), and form the tag to the Eve, respectively. It is assumed that the wireless channel satisfies reciprocity. Therefore, within a coherence time, $H_{R,T} = H_{T,R}$.

In step **1100,** the reader and the tag are preconfigured with a root key K and a quantization scheme. The quantization scheme may include at least one of a phase quantization scheme, an amplitude quantization scheme, an RSSI quantization scheme, or the like.

In step 1101, the reader transmits a key generation request to the tag.

In step **1102,** after receiving the key generation request, the tag transmits one private pilot signal of length $L$ $X_T = diag(x_1, ..., x_L)$ to the reader using a single antenna. The generation method of the private pilot signal $X_T$ has been described in the above embodiments and will not be repeated.

In step 1103, the reader generates a private pilot $X_R = diag(x_1, ..., x_L)$ at a reader side using a shared key K, performs channel estimation using the received private pilot signal, and obtains a channel estimation value $H'_{R,T} = \left[\widehat{H}_1, ..., \widehat{H}_N\right]^H$ between the tag and the reader.

The generation method of the private pilot at the reader side is the same as that at the tag side. In this step, a signal received by the reader using multiple antennas is $Y_R = [y_1, ..., y_L]_{N \times L} = H_{T,R}X_T + N_R$, where

$$H_{T,R} = \begin{bmatrix} H_1 & \cdots & H_L \\ \vdots & \ddots & \vdots \\ H_N & \cdots & H_N \end{bmatrix}_{N \times L}$$, N is the number of antennas of the reader, and $N_R \sim CN(0, \sigma_R^2)$ is Gaussian noise at the reader side.

In **1104,** the reader randomly selects M quantization sequences according to the quantization scheme and concatenates them into a pairwise key Ks for the two parties. The processing of this step may be the same as that of one of step 604, step 804, and step 1004 in the above embodiments.

In 1105, the reader constructs a radio frequency coefficient $W_R$ corresponding to a response signal transmitted to the tag according to the estimated channel and the private pilot $X_R$.

In step 1106, the reader transmits the response signal using the calculated antenna weight coefficient.

In step 1107, the tag uses the received response signal $X_R$ as a key source to measure its channel state information (CSI) and generates a pairwise key Ks' using the quantization scheme.

The number of the above response signals may be plural. For the sake of simplicity, FIG. **11** only taks step 1106 as an example, which does not mean that only one response signal must be transmitted. For example, multiple response signals are transmitted, any one response signal can be expressed as $W_R$ *

$$X_R = \begin{bmatrix} \frac{x_1}{\widehat{H}_1} & \cdots & \frac{x_L}{\widehat{H}_1} \\ \vdots & \ddots & \vdots \\ \frac{x_1}{\widehat{H}_N} & \cdots & \frac{x_L}{\widehat{H}_N} \end{bmatrix}_{N \times L}$$ . When noise is not considered, in step 1107, any response signal received by the tag is expressed as $y_T = H'_{R,T}W_R * X_R = X_R$.

The description of steps 1108 to 1110 is the same as that of steps 608 to 610 in the above embodiments and will not be repeated.

With reference to FIG. 12, yet another exemplary description of the key generation method provided in the above embodiment is given by taking an example in which the first device is a UE/base station, the second device is an A-IoT, and the first network device is an AF/NF. In this example, the A-IoT and the AF/NF at the network side share a root key, and the AF/NF transmits a pilot key and a quantization scheme to the UE/base station through a key request response message.

In step 1200, the A-IoT device and the AF/NF are preconfigured with a same root key K and a same quantization scheme.

In step 1201, the AF/NF derives a first pilot key based on the root key K. The derivation method of the first pilot key is the same as that in the previous embodiments and will not be repeated.

In step 1202, the AF/NF transmits the first pilot key and the quantization scheme to the UE/base station.

In step 1203, the UE/base station transmits a key generation request to the A-IoT device.

In step 1204, the A-IoT device derives the first pilot key based on the root key K, and generates a private pilot based on the first pilot key. The generation method of the private pilot is the same as that in the previous embodiments.

In step 1205, the A-IoT device transmits the private pilot to the UE/base station.

In step 1206, the UE/base station calculates a private pilot based on the pilot key transmitted by the AF/NF and performs channel estimation on an uplink channel for its CSI; the UE/base station randomly selects quantization sequences based on the quantization scheme and concatenates them to form a pairwise key Ks; and the UE/base station calculates at least one of a transmitted power, a transmitted phase, or an antenna weight coefficient (i.e., radio frequency coefficient) of a downlink pilot signal based on the selected quantization sequences.

In step 1207, the UE/base station transmits the private pilot as a response signal to the A-IoT. This step does not limit the number of response signals, and can be processed using the processing method provided in any of the above examples, which will not be repeated.

In step 1208, the A-IoT measures CSI (amplitude and/or phase) of the received response signal and generates a pairwise key Ks' based on the quantization scheme.

In step 1209, the A-IoT transmits a key confirmation request message to the UE/base station using the generated pairwise key Ks'.

In step 1210, the UE/base station uses the pairwise key Ks generated by itself to perform consistency verification on the key confirmation request message transmitted by the A-IoT device to determine whether the keys of the two parties are consistent. If the verification fails, a key generation failure message is transmitted, and the key generation request command is re-performed, i.e., returning to step 1203. If the verification succeeds, the process proceeds to step 1211a.

In step 1211a, the UE/base station transmits a key confirmation response message to the A-IoT. The message may be an encrypted message after the SMC is completed, such as an encrypted message generated based on Ks, i.e., $Encryption_{K_s}$(data), where data is the transmitted data.

In step 1211b, the UE/base station transmits the pairwise key Ks to the AF/NF. It should be noted that this step indicated by a dotted line is an optional step, and may not be performed.

In step 1212a, the A-IoT updates the pilot key using the generated pairwise key for subsequent generation of a private pilot by the A-IoT. Updating the pilot key may refer to obtaining the updated second pilot key and the second pilot key is used as a new first pilot key. Its specific update method is the same as that in the above embodiments.

In step 1212b, the UE/base station updates the pilot key using the generated pairwise key for subsequent generation of a private pilot. It should be noted that the update of the pilot key can also be completed at the network side AF/NF, which is not exemplarily described in this embodiment.

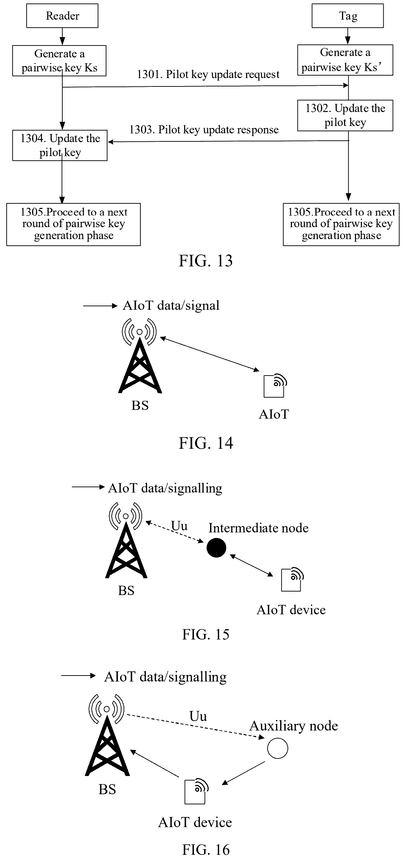

With reference to FIG. 13, yet another exemplary description of the key generation method provided in the above embodiment is given by taking an example in which the first device is a reader and the second device is a tag. After the reader and the tag generate pairwise keys Ks and Ks', the following processes are performed.

In step 1301, the reader transmits a pilot key update request to the tag. The request may include a second random number R generated by the reader.

In step 1302, after receiving the command, the tag updates the pilot key. After this step is completed, the tag can obtain a second pilot key, and then use the second pilot key as a new first pilot key. The method for updating the pilot key can be that a new pilot key Kp is generated using a key derivation function. Input parameters include a pairwise key Ks generated in a previous round, the random number R transmitted by the reader, the Tag ID, the length of the Tag ID, a serial number SQN, a length of the serial number SQN, the random number R, a length of the random number R, a fixed value assigned by a third party (such as FC=0x7E) and other parameters, which are not repeated.

In step 1303, the tag transmits a pilot key update response message.

In step 1304, the reader updates the pilot key in the same manner as that in step 1302. After this step is completed, the reader can obtain the second pilot key, and then use the second pilot key as the new first pilot key.

In step 1305, the reader and the tag proceed to a next round of key generation phase.

By employing the above solution, the first device side can perform channel estimation based on the pilot key and the first pilot signal after receiving the first pilot signal from the second device, select quantization sequences to generate its own first key, and then transmit response signals to the second device in combination with the channel estimation value and the quantization sequences. As a result, the second device obtains the second key based on the response signals. In this way, the first device performs the channel estimation based on the pilot key, which can avoid a problem of low security caused by the use of a common pilot for channel estimation and subsequent pairwise key negotiation, and improve security of the keys generated by the first device and the second device. In addition, only the first device needs to perform complex calculations such as the channel estimation, which can reduce processing complexity at the second device side and is more suitable for the second device with lower capabilities.

Finally, the effect of the key generation method provided in this embodiment is described in combination with the related art. The zero-power terminal is an Internet of Things device driven by energy harvesting, which does not require a battery or has only limited energy storage capacity (for example, using a capacitor). It uses backscattering and low-power computing technology. The terminal has an extremely simple radio frequency and baseband circuit structure, which greatly reduces the cost, size and circuit energy consumption of the terminal. During standardization discussion, the zero-power IoT is also called ambient power enabled IoT, which is abbreviated as Ambient IoT (or A-IoT). In some technical documents, it is also called passive IoT. A-IoT devices use various environmental energies, such as wireless radio frequency energy, light energy, solar energy, thermal energy, mechanical energy, and other environmental energies to drive their own IoT devices. This type of devices may have no energy storage capability or may have a very limited energy storage capability (such as using a capacitor with a capacity of tens of uF). Compared with existing cellular IoT technologies (such as NB-IoT, LTE-M, RedCap), IoT services supported by the AIoT can realize battery-free terminals and meet the IoT communication needs of ultra-low power consumption, extremely small size and extremely low cost. The 3GPP SA1 working group defines that AIoT devices can meet the following conditions: operate under extreme environmental conditions, such as high voltage, extremely high/low temperature, and humid environments; have ultra-low complexity and very small device size/form factor (such as millimeter thickness); be maintenance-free (for example, the device does not need to replace traditional batteries) and have a longer service life (for example, 20 years); have no battery or have only limited energy storage capacity; do not require dedicated RFID tag readers, etc.

Based on the discussion of Ambient IoT application scenarios, the Ambient IoT can be used in at least the following four scenarios: object recognition, such as logistics, production line product management, and supply chain management; environmental monitoring, such as monitoring of temperature, humidity, and harmful gas of working environments and natural environments; positioning, such as indoor positioning, smart object search, and production line item positioning; and intelligent control, such as intelligent control of various electrical appliances in smart homes (turning on and off air conditioners, adjusting temperatures), and intelligent control of various facilities in agricultural greenhouses (automatic irrigation and fertilization).

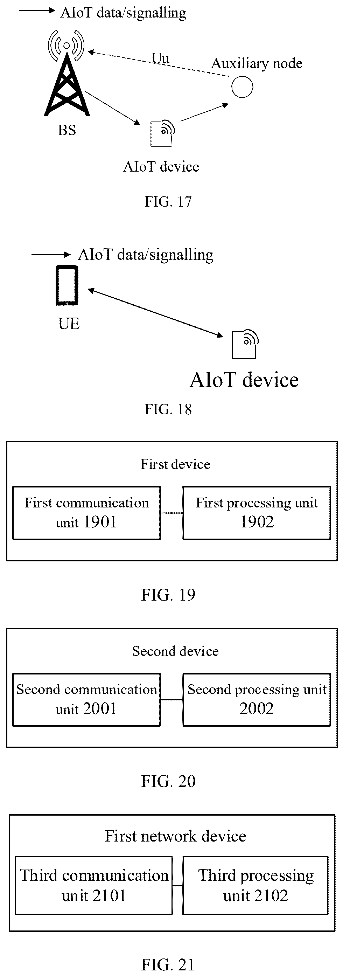

Four AIoT topologies applicable to AIoT devices are as follows. In topology 1, as shown in FIG. 14, the AIoT device directly communicates bidirectionally with the base station (shown as BS in FIG. 14). The communication between the base station and the AIoT device includes AIoT data/signaling. This topology includes the data/signaling transmitted from the BS to the AIoT device and received by the BS from the AIoT device. In topology 2, as shown in FIG. 15, the AIoT device communicates bidirectionally with one intermediate node, and the intermediate node transmits information between the BS and the AIoT device. In this topology, the intermediate node can be a relay, (IAB) node, UE, repeater, etc. In topology 3, as shown in FIGS. 16 and 17, FIG. 16 is directed to an uplink scenario, and FIG. 17 is directed to a downlink scenario. Regardless of the uplink or downlink scenario, the AIoT device transmits data/signaling to the base station and receives AIoT data/signaling from an assisting node, or the AIoT device receives data/signaling from the base station and transmits the data/signaling to the assisting node. In this topology, the assisting node can be a relay, IAB node, UE, repeater, etc. In topology 4, as shown in FIG. 18, the AIoT device communicates bidirectionally with the terminal. The communication between the UE and the AIoT device includes AIoT data/signaling.

Based on the energy storage capacity of AIoT devices and whether they can actively transmit radio frequency signals, the AIoT devices are divided into the following three categories. Device A has no energy storage, no independent signal transmission and amplification, and transmits via backscattering. Its power consumption target during transmission and reception is $\leq 1\mu W$ or $\leq 10\mu W$. The device complexity is comparable to that of UHF RFID ISO18000-6C (EPC C1G2). Device B has energy storage, no independent signal transmission, and transmits via backscattering. The reflected signal can be amplified using the stored energy. Its power consumption target during transmission and reception is less than a power consumption target of Device C, and greater than or much greater than the power consumption target of Device A. The device complexity is between that of Device A and that of Device C. Device C has energy storage and independent signal transmission. That is, Device C has active radio frequency components for transmission. Its power consumption target during transmission and reception is $\leq 1$ mW to $\leq 10$ mW, and the device complexity is several orders of magnitude lower than that of NB-IoT. Although the device C can support the transmission of independent signals, its transmission and reception power consumption is still low, and the device complexity is several orders of magnitude lower than that of the NB-IoT device. Therefore, the 5G-AKA-based security protocol in 3GPP may be difficult to execute on Class C AIoT devices (computational complexity of functions f1 to f5 is high), and it is necessary to conduct lightweight security protocol research for the Class C AIoT devices.

A basic principle of physical layer key generation is to use randomness, time-variation and reciprocity of the wireless channel to generate a shared key between the transmitting device and the receiving device. An eavesdropper cannot obtain the same key due to experiencing different channel fading conditions. Theoretically, in a rich multipath scattering environment, an illegal user who is more than half a wavelength away from a legitimate user will obtain irrelevant channel measurement values, which means that the illegal user cannot obtain the generated key. Therefore, the physical layer key generation provides security guarantees that do not depend on computational complexity.

The physical layer key generation process usually includes channel detection and feature extraction, bit quantization, information harmonization and privacy amplification. Channel detection refers to the exchange of channel detection signals between legitimate nodes within a channel coherence time, and the use of channel estimation and other means to extract characteristics of the received signals. Several typical channel characteristics include channel state information (CSI), received signal strength (RSS), phase, envelope, etc. Their respective characteristics can be as follows. CSI is characterized by fine granularity, including channel impulse response (CIR) (including amplitude and phase) and channel frequency response (CFR), and has high requirements for key generation rate and measurement equipment. RSS and envelope are characterized by coarse granularity. For example, only one RSS value can be obtained for each data packet, or only a wireless signal profile can be obtained for the envelope, which is actually composed of a series of RSS values. The key generation rate and measurement equipment requirements corresponding to RSS and envelope are relatively low. The phase is characterized by relatively uniform distribution of fine granularity in the wireless channel, and has high requirements for key generation rate and measurement equipment. Most existing physical layer key generation schemes use RSS or CSI as channel characteristics and extract the common key by exchanging detection signals between legitimate communicating parties. These solutions face various challenges when directly applied to Class C AIoT devices, such as low key generation rate, inability to support complex channel estimation, and poor resistance to man-in-the-middle attacks. Specifically, they face active attacks such as man-in-the-middle forwarding. Most existing physical layer key generation schemes rely on public pilots for channel estimation and feature extraction. However, due to the broadcast nature of wireless communications and the openness of transmission media, the public nature of pilots exposes legitimate users to active attacks (such as signal injection and man-in-the-middle transparent forwarding attacks) during the physical layer key generation process, which in turn leads to the leakage of keys generated by legitimate users and places high requirements for the capabilities of the transceiver equipment. Existing physical layer key generation schemes require both the transmitter and the receiver to perform channel estimation. Although Class C A-IoT devices have active transmission capabilities, their transmit and receive power consumption remains low (typically $\leq$ 1 mW). The device circuits meet minimalist design requirements, and the device complexity is several orders of magnitude lower than that of NB-IoT devices. This may not support complex channel estimation. Based on this, it is necessary to redesign the physical layer key generation scheme to adapt to this type of equipment.

The key generation method provided in this embodiment can resist man-in-the-middle attacks. Specifically, the second device side uses a private pilot signal instead of the traditional public pilot. During the key generation process, illegal users cannot obtain the private pilot because they lack knowledge of the shared pilot key, thereby avoiding the leakage of information during the key generation process and resisting man-in-the-middle attacks. Only one-way channel estimation is required. Specifically, the first device performs channel estimation based on the private pilot transmitted by the second device, and determines the states of the signals received by the second device (such as receiving phase, receiving amplitude, RSSI, etc.) by calculating parameters such as power (phases, antenna weight coefficients). The second device does not need channel estimation, which reduces the requirements for computing power and is especially suitable for AIoT devices. The key generation rate can be improved because the first device randomly selects quantized sequences as the key. Its key generation rate includes not only randomness of the reciprocal channel but also randomness of the source signal. As a result, the key generation rate is improved.

FIG. 19 is a schematic diagram showing a composition structure of a first device according to an embodiment of the present application. The first device includes:

a first communication unit 1901 configured to receive a first pilot signal transmitted by a second device, and transmit multiple response signals to the second device based on a channel estimation value and multiple first quantization sequences, where the multiple response signals are used for the second device to generate a second key; and
a first processing unit 1902 configured to calculate the channel estimation value based on a first pilot key and the first pilot signal, and generate a first key based on the multiple first quantization sequences.

The first processing unit is configured to determine multiple groups of parameter values based on the multiple first quantization sequences, and determine multiple groups of transmission parameters based on the channel estimation value and the multiple groups of parameter values.

The first communication unit is configured to transmit the multiple response signals to the second device based on the multiple groups of transmission parameters.

The first processing unit is configured to determine an i-th group of parameter values based on first quantization information and an i-th initial quantization sequence of each type of one or more types corresponding to an i-th first quantization sequence, where the first quantization information is used to determine a candidate parameter value corresponding to each candidate quantization sequence of multiple candidate quantization sequences, the one or more types include at least one of a phase type, an amplitude type or a received signal strength indicator (RSSI) type, the i-th first quantization sequence is one of the multiple first quantization sequences, the i-th group of parameter values is one of the multiple groups of parameter values, and i is an integer.

The first processing unit is configured to generate the i-th first quantization sequence based on the i-th initial quantization sequence of each type corresponding to the i-th first quantization sequence.

The first processing unit is configured to perform at least one of: in a case where the i-th initial quantization sequence of each type of the one or more types corresponding to the i-th first quantization sequence includes an i-th initial quantization sequence of the amplitude type, determining an i-th amplitude value in the i-th group of parameter values based on the i-th initial quantization sequence of the amplitude type and first amplitude quantization information; in a case where the i-th initial quantization sequence of each type of the one or more types corresponding to the i-th first quantization sequence includes an i-th initial quantization sequence of the phase type, determining an i-th phase value in the i-th group of parameter values based on the i-th initial quantization sequence of the phase type and first phase quantization information; or in a case where the i-th initial quantization sequence of each type of the one or more types corresponding to the i-th first quantization sequence includes an i-th initial quantization sequence of the RSSI type, determining an i-th RSSI value in the i-th group of parameter values based on the i-th initial quantization sequence of the RSSI type and first RSSI quantization information.

The first processing unit is configured to perform at least one of: in a case where the i-th group of parameter values includes the i-th amplitude value, calculating an i-th transmitted power in an i-th group of transmission parameters based on a channel estimation amplitude value and the i-th amplitude value, where the i-th group of transmission parameters is one of the multiple groups of transmission parameters; in a case where the i-th group of parameter values includes the i-th phase value, calculating an i-th transmission phase in the i-th group of transmission parameters based on a channel estimation phase value and the i-th phase value; or in a case where the i-th group of parameter values includes the i-th RSSI value, calculating an i-th transmitted power in the i-th group of transmission parameters based on a channel estimation amplitude value and the i-th RSSI value.

The first processing unit is configured to calculate a radio frequency coefficient based on the channel estimation value, and determine the multiple groups of transmission parameters based on the multiple groups of parameter values and the radio frequency coefficient.

The first processing unit is configured to determine an i-th group of transmission parameters based on the i-th group of parameter values and the radio frequency coefficient, and the i-th group of transmission parameters is one of the multiple groups of transmission parameters.

The first communication unit is configured to transmit an i-th response signal to the second device based on an i-th group of transmission parameters, where the i-th response signal is one of the multiple response signals, and different response signals of the multiple response signals occupy different time domain ranges.

Each response signal of the multiple response signals is a second pilot signal, and the second pilot signal is calculated based on the first pilot key.

The first processing unit is configured to calculate multiple radio frequency sub-coefficients based on the radio frequency coefficient, where the first device has multiple antennas, and different radio frequency sub-coefficients of the multiple radio frequency sub-coefficients correspond to different antennas of the first device; and the first processing unit is configured to determine multiple groups of transmission parameters corresponding to each group of response signals of multiple groups of response signals based on the multiple groups of parameter values and the multiple radio frequency sub-coefficients, where each group of response signals includes one or more response signals, different groups of response signals occupy different time domain ranges, and different response signals of the one or more response signals correspond to different antennas.

The first processing unit is configured to determine a j-th group of transmission parameters corresponding to a j-th group of response signals based on multiple groups of parameter values corresponding to the j-th group of response signals and a radio frequency sub-coefficient corresponding to each response signal in the j-th group of response signals, where the j-th group of response signals is one of the multiple groups of response signals and j is an integer.

The first communication unit is configured to transmit the j-th group of response signals to the second device based on the j-th group of transmission parameters corresponding to the j-th group of response signals.

Different response signals in the j-th group of response signals are different third pilot signals.

The first processing unit is configured to calculate a fourth pilot signal based on the first pilot key, and calculate the channel estimation value based on the fourth pilot signal and the first pilot signal.

The first processing unit is configured to calculate the fourth pilot signal based on the first pilot key and a first parameter, where the first parameter includes at least one of a first random number, a length of the first random number, a first timestamp, an identifier of the second device, a length of the identifier of the second device, or a first count value.

The first communication unit is configured to receive a key confirmation request message from the second device, where the key confirmation request message carries a first verification code, and the first verification code is calculated by the second device based on the second key; and the first communication unit is configured to verify key consistency based on the first key and the first verification code.

The first processing unit is configured to calculate a second verification code based on the first key; and verify the key consistency based on the second verification code and the first verification code.

The key confirmation request message further carries ciphertext data; and the first processing unit is configured to calculate the second verification code and plaintext data based on the first key, the ciphertext data and the first verification code.

The first communication unit is configured to transmit a pilot key update message to the second device; and receive a pilot key update response message from the second device, where the pilot key update response message is used to indicate that the second device has obtained a second pilot key.

The pilot key update message carries a second random number; and the first processing unit is configured to calculate the second pilot key based on a third key and a second parameter, where the second parameter includes at least one of the second random number, a length of the second random number, an identifier of the second device, a length of the identifier of the second device, a serial number, a length of the serial number or a first specified value; and the third key includes one of the first key and the first pilot key.

The first quantization information is predefined, or indicated by a first network device.

The first communication unit is configured to receive the first quantization information from the first network device.

The first pilot key is shared between the first device and the second device.

The first communication unit is configured to receive the first pilot key from a first network device, where the first pilot key is calculated by the first network device based on a shared key, and the shared key is shared between the second device and the first network device.

The first communication unit is configured to transmit the first key to the first network device.

The first network device includes at least one of an application function (AF) or a network function (NF), and the NF includes at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

The first device includes one of a terminal and a second network device; and the second device is a zero-power consumption terminal.

FIG. 20 is a schematic diagram showing a composition structure of a second device according to an embodiment of the present application. The second device includes:

a second processing unit 2002 configured to calculate a first pilot signal based on a first pilot key, and generate a second key based on multiple response signals; and

a second communication unit 2001 configured to transmit the first pilot signal to a first device, and receive the multiple response signals from the first device.

The second processing unit is configured to determine multiple second quantization sequences based on reception parameters of each response signal of the multiple response signals, and generate the second key based on the multiple second quantization sequences.

The second processing unit is configured to determine an i-th received quantization sequence of each type of one or more types based on reception parameters of an i-th response signal and second quantization information, where the one or more types include at least one of a phase type, an amplitude type, or a received signal strength indicator (RSSI) type; the second quantization information is used to determine a candidate parameter value corresponding to each candidate quantization sequence of multiple candidate quantization sequences, and a parameter range corresponding to each candidate parameter value of multiple candidate parameter values; and the i-th response signal is one of the multiple response signals, and i is an integer; and the second processing unit is configured to generate an i-th second quantization sequence based on the i-th received quantization sequence of each type, where the i-th second quantization sequence is one of the multiple second quantization sequences.

The reception parameters of the i-th response signal include at least one of a received amplitude of the i-th response signal, a received phase of the i-th response signal, or an RSSI of the i-th response signal.

The second processing unit is configured to perform at least one of: determining an i-th received quantization sequence of the amplitude type based on the received amplitude of the i-th response signal and second amplitude quantization information; determining an i-th received quantization sequence of the phase type based on the received phase of the i-th response signal and second phase quantization information; or determining an i-th received quantization sequence of the RSSI type based on the RSSI of the i-th response signal and second RSSI quantization information.

Different response signals of the multiple response signals occupy different time domain ranges, each response signal of the multiple response signals is a second pilot signal, and the second pilot signal is calculated based on the first pilot key.

The second communication unit is configured to receive multiple groups of response signals from the first device, where each group of response signals of the multiple groups of response signals includes one or more response signals, and different groups of response signals occupy different time domain ranges.

Different response signals in each group of response signals are different third pilot signals.

The second processing unit is configured to calculate the first pilot signal based on the first pilot key and a first parameter, where the first parameter includes at least one of a first random number, a length of the first random number, a first timestamp, an identifier of the second device, a length of the identifier of the second device, or a first count value.

The second processing unit is configured to calculate a first verification code based on the second key.

The second communication unit is configured to transmit a key confirmation request message to the first device, where the key confirmation request message carries the first verification code, and the first verification code is used for the first device to verify key consistency.

The key confirmation request message further carries ciphertext data; and the second processing unit is configured to calculate the first verification code and the ciphertext data based on the second key and plaintext data.

The second communication unit is configured to receive a pilot key update message, and transmit a pilot key update response message, where the pilot key update response message is used to indicate that the second device has obtained a second pilot key.

The second processing unit is configured to calculate the second pilot key.

The pilot key update message carries a second random number; and the second processing unit is configured to calculate the second pilot key based on a fourth key and a second parameter, where the second parameter includes at least one of the second random number, a length of the second random number, an identifier of the second device, a length of the identifier of the second device, a serial number, a length of the serial number, or a first specified value; and the fourth key includes one of the second key and the first pilot key.

The second quantization information is predefined.

The first pilot key is shared between the first device and the second device.

The second processing unit is configured to calculate the first pilot key based on a shared key, and the shared key is shared between the second device and a first network device.

The first network device includes at least one of an application function (AF) or a network function (NF), and the NF includes at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

The first device includes one of a terminal and a second network device; and the second device is a zero-power consumption terminal.

FIG. 21 is a schematic diagram showing a composition structure of a first network device according to an embodiment of the present application. The first network device includes:

a third communication unit 2101 configured to transmit a first pilot key to a first device, where the first pilot key is used for the first device to calculate a channel estimation value and transmit multiple response signals to a second device based on the channel estimation value, and the multiple response signals are used for the second device to generate a second key.

As shown in FIG. 21, the first network device further includes a third processing unit 2102.

The third processing unit is configured to calculate the first pilot key based on a shared key, where the shared key is shared between the first network device and the second device.

The third communication unit is configured to transmit first quantization information to the first device, where the first quantization information is used to determine a candidate parameter value corresponding to each candidate quantization sequence of multiple candidate quantization sequences.

The third communication unit is configured to receive a first key transmitted by the first device.

The third communication unit is configured to transmit a pilot key update message, and receive a pilot key update response message, and the pilot key update response message is used to indicate that the second device has obtained a second pilot key.

The pilot key update message carries a second random number; and the third processing unit is configured to calculate the second pilot key based on a third key and a second parameter, where the second parameter includes at least one of the second random number, a length of the second random number, an identifier of the second device, a length of the identifier of the second device, a serial number, a length of the serial number, or a first specified value; and the third key includes one of the first key and the first pilot key.

The first network device includes at least one of an application function (AF) or a network function (NF), and the NF includes at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

The first device includes one of a terminal and a second network device.

The second device is a zero-power consumption terminal.

Devices in the embodiments of the present application can implement the corresponding functions of devices in the embodiments of the key generation method. Processes, functions, implementations and beneficial effects corresponding to various modules (sub-modules, units or components, etc.) of the first device, the second device, or the first network device can refer to the corresponding description in the above method embodiment, and will not be repeated here. It should be noted that the described functions of the various modules (sub-modules, units or components, etc.) of the first device, the second device, or the first network device in the embodiments of the present application can be implemented by different modules (sub-modules, units or components, etc.) or by the same module (sub-module, unit or component, etc.).

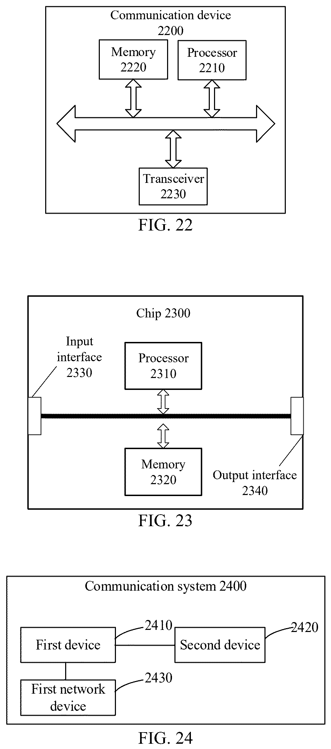

FIG. 22 is a schematic diagram showing a structure of a communication device 2200 according to an embodiment of the present application. The communication device 2200 includes a processor 2210. The processor 2210 can call a computer program from a memory and run the computer program to cause the communication device 2200 to implement the method in the embodiments of the present application.

In one possible implementation, the communication device 2200 may further include a memory 2220. The processor 2210 may call a computer program from the memory 2220 and run the computer program to cause the communication device 2200 to implement the method in the embodiments of the present application.

The memory 2220 may be a separate device independent of the processor 2210, or may be integrated into the processor 2210.

In one possible implementation, the communication device 2200 may further include a transceiver 2230, and the processor 2210 may control the transceiver 2230 to communicate with other devices. Specifically, it may transmit information or data to other devices, or receive information or data transmitted by other devices.

The transceiver 2230 may include a transmitter and a receiver. The transceiver 2230 may further include antenna(s), and the number of antennas may be one or more.

In one possible implementation, the communication device 2200 may be the first device, the second device, or the first network device in the embodiments of the present application. The communication device 2200 can implement the corresponding processes implemented by the first device, the second device, or the first network device in each method in the embodiments of the present application. For the sake of brevity, they will not be repeated here.

In embodiments of the present application, a first device is provided. The first device includes a processor, and a memory in communication with the processor. The memory is configured to store instructions. The instructions, when executed by the processor, cause the first device to: receive a first pilot signal transmitted by a second device, and transmit multiple response signals to the second device based on a channel estimation value and multiple first quantization sequences, where the multiple response signals are used for the second device to generate a second key; and calculate the channel estimation value based on a first pilot key and the first pilot signal, and generate a first key based on the multiple first quantization sequences.

The instructions further cause the first device to: determine multiple groups of parameter values based on the multiple first quantization sequences, determine multiple groups of transmission parameters based on the channel estimation value and the multiple groups of parameter values, and transmit the multiple response signals to the second device based on the multiple groups of transmission parameters.

The instructions further cause the first device to: determine an i-th group of parameter values based on first quantization information and an i-th initial quantization sequence of each type of one or more types corresponding to an i-th first quantization sequence, where the first quantization information is used to determine a candidate parameter value corresponding to each candidate quantization sequence of multiple candidate quantization sequences, the one or more types include at least one of a phase type, an amplitude type or a received signal strength indicator (RSSI) type, the i-th first quantization sequence is one of the multiple first quantization sequences, the i-th group of parameter values is one of the multiple groups of parameter values, and i is an integer.

The instructions further cause the first device to: generate the i-th first quantization sequence based on the i-th initial quantization sequence of each type corresponding to the i-th first quantization sequence.

The instructions further cause the first device to perform at least one of: in a case where the i-th initial quantization sequence of each type of the one or more types corresponding to the i-th first quantization sequence includes an i-th initial quantization sequence of the amplitude type, determining an i-th amplitude value in the i-th group of parameter values based on the i-th initial quantization sequence of the amplitude type and first amplitude quantization information; in a case where the i-th initial quantization sequence of each type of the one or more types corresponding to the i-th first quantization sequence includes an i-th initial quantization sequence of the phase type, determining an i-th phase value in the i-th group of parameter values based on the i-th initial quantization sequence of the phase type and first phase quantization information; or in a case where the i-th initial quantization sequence of each type of the one or more types corresponding to the i-th first quantization sequence includes an i-th initial quantization sequence of the RSSI type, determining an i-th RSSI value in the i-th group of parameter values based on the i-th initial quantization sequence of the RSSI type and first RSSI quantization information.

The instructions further cause the first device to perform at least one of: in a case where the i-th group of parameter values includes the i-th amplitude value, calculating an i-th transmitted power in an i-th group of transmission parameters based on a channel estimation amplitude value and the i-th amplitude value, where the i-th group of transmission parameters is one of the multiple groups of transmission parameters; in a case where the i-th group of parameter values includes the i-th phase value, calculating an i-th transmission phase in the i-th group of transmission parameters based on a channel estimation phase value and the i-th phase value; or in a case where the i-th group of parameter values includes the i-th RSSI value, calculating an i-th transmitted power in the i-th group of transmission parameters based on a channel estimation amplitude value and the i-th RSSI value.

The instructions further cause the first device to: calculate a radio frequency coefficient based on the channel estimation value, and determine the multiple groups of transmission parameters based on the multiple groups of parameter values and the radio frequency coefficient.

The instructions further cause the first device to: determine an i-th group of transmission parameters based on the i-th group of parameter values and the radio frequency coefficient, and the i-th group of transmission parameters is one of the multiple groups of transmission parameters.

The instructions further cause the first device to: transmit an i-th response signal to the second device based on an i-th group of transmission parameters, where the i-th response signal is one of the multiple response signals, and different response signals of the multiple response signals occupy different time domain ranges.

Each response signal of the multiple response signals is a second pilot signal, and the second pilot signal is calculated based on the first pilot key.

The instructions further cause the first device to: calculate multiple radio frequency sub-coefficients based on the radio frequency coefficient, where the first device has multiple antennas, and different radio frequency sub-coefficients of the multiple radio frequency sub-coefficients correspond to different antennas of the first device; and determine multiple groups of transmission parameters corresponding to each group of response signals of multiple groups of response signals based on the multiple groups of parameter values and the multiple radio frequency sub-coefficients, where each group of response signals includes one or more response signals, different groups of response signals occupy different time domain ranges, and different response signals of the one or more response signals correspond to different antennas.

The instructions further cause the first device to: determine a j-th group of transmission parameters corresponding to a j-th group of response signals based on multiple groups of parameter values corresponding to the j-th group of response signals and a radio frequency sub-coefficient corresponding to each response signal in the j-th group of response signals, where the j-th group of response signals is one of the multiple groups of response signals and j is an integer.

The instructions further cause the first device to: transmit the j-th group of response signals to the second device based on the j-th group of transmission parameters corresponding to the j-th group of response signals.

Different response signals in the j-th group of response signals are different third pilot signals.

The instructions further cause the first device to: calculate a fourth pilot signal based on the first pilot key, and calculate the channel estimation value based on the fourth pilot signal and the first pilot signal.

The instructions further cause the first device to: calculate the fourth pilot signal based on the first pilot key and a first parameter, where the first parameter includes at least one of a first random number, a length of the first random number, a first timestamp, an identifier of the second device, a length of the identifier of the second device, or a first count value.

The instructions further cause the first device to: receive a key confirmation request message from the second device, where the key confirmation request message carries a first verification code, and the first verification code is calculated by the second device based on the second key; and verify key consistency based on the first key and the first verification code.

The instructions further cause the first device to: calculate a second verification code based on the first key; and verify the key consistency based on the second verification code and the first verification code.

The instructions further cause the first device to: calculate the second verification code and plaintext data based on the first key, the ciphertext data and the first verification code.

The instructions further cause the first device to: transmit a pilot key update message to the second device; and receive a pilot key update response message from the second device, where the pilot key update response message is used to indicate that the second device has obtained a second pilot key.

The pilot key update message carries a second random number; and the instructions further cause the first device to calculate the second pilot key based on a third key and a second parameter, where the second parameter includes at least one of the second random number, a length of the second random number, an identifier of the second device, a length of the identifier of the second device, a serial number, a length of the serial number or a first specified value; and the third key includes one of the first key and the first pilot key.

The first quantization information is predefined, or indicated by a first network device.

The instructions further cause the first device to receive the first quantization information from the first network device.

The first pilot key is shared between the first device and the second device.

The instructions further cause the first device to:

receive the first pilot key from a first network device, where the first pilot key is calculated by the first network device based on a shared key, and the shared key is shared between the second device and the first network device.

The instructions further cause the first device to: transmit the first key to the first network device.

The first network device includes at least one of an application function (AF) or a network function (NF), and the NF includes at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

The first device includes one of a terminal and a second network device; and the second device is a zero-power consumption terminal.

In embodiments of the present application, a second device is provided. The second device includes a processor, and a memory in communication with the processor. The memory is configured to store instructions. The instructions, when executed by the processor, cause the second device to perform steps.

The instructions further cause the second device to: calculate a first pilot signal based on a first pilot key, and generate a second key based on multiple response signals; and transmit the first pilot signal to a first device, and receive the multiple response signals from the first device.

The instructions further cause the second device to: determine multiple second quantization sequences based on reception parameters of each response signal of the multiple response signals, and generate the second key based on the multiple second quantization sequences.

The instructions further cause the second device to determine an i-th received quantization sequence of each type of one or more types based on reception parameters of an i-th response signal and second quantization information, where the one or more types include at least one of a phase type, an amplitude type, or a received signal strength indicator (RSSI) type; the second quantization information is used to determine a candidate parameter value corresponding to each candidate quantization sequence of multiple candidate quantization sequences, and a parameter range corresponding to each candidate parameter value of multiple candidate parameter values; and the i-th response signal is one of the multiple response signals, and i is an integer; and the instructions further cause the second device to generate an i-th second quantization sequence based on the i-th received quantization sequence of each type, where the i-th second quantization sequence is one of the multiple second quantization sequences.

The reception parameters of the i-th response signal include at least one of a received amplitude of the i-th response signal, a received phase of the i-th response signal, or an RSSI of the i-th response signal.

The instructions further cause the second device to perform at least one of: determining an i-th received quantization sequence of the amplitude type based on the received amplitude of the i-th response signal and second amplitude quantization information; determining an i-th received quantization sequence of the phase type based on the received phase of the i-th response signal and second phase quantization information; or determining an i-th received quantization sequence of the RSSI type based on the RSSI of the i-th response signal and second RSSI quantization information.

Different response signals of the multiple response signals occupy different time domain ranges, each response signal of the multiple response signals is a second pilot signal, and the second pilot signal is calculated based on the first pilot key.

The instructions further cause the second device to: receive multiple groups of response signals from the first device, where each group of response signals of the multiple groups of response signals includes one or more response signals, and different groups of response signals occupy different time domain ranges.

Different response signals in each group of response signals are different third pilot signals.

The instructions further cause the second device to calculate the first pilot signal based on the first pilot key and a first parameter, where the first parameter includes at least one of a first random number, a length of the first random number, a first timestamp, an identifier of the second device, a length of the identifier of the second device, or a first count value.

The instructions further cause the second device to: calculate a first verification code based on the second key.

The instructions further cause the second device to: transmit a key confirmation request message to the first device, where the key confirmation request message carries the first verification code, and the first verification code is used for the first device to verify key consistency.

The key confirmation request message further carries ciphertext data; and the instructions further cause the second device to calculate the first verification code and the ciphertext data based on the second key and plaintext data.

The instructions further cause the second device to: receive a pilot key update message, and transmit a pilot key update response message, where the pilot key update response message is used to indicate that the second device has obtained a second pilot key.

The instructions further cause the second device to calculate the second pilot key.

The pilot key update message carries a second random number; the instructions further cause the second device to: calculate the second pilot key based on a fourth key and a second parameter, where the second parameter includes at least one of the second random number, a length of the second random number, an identifier of the second device, a length of the identifier of the second device, a serial number, a length of the serial number, or a first specified value; and the fourth key includes one of the second key and the first pilot key.

The second quantization information is predefined.

The first pilot key is shared between the first device and the second device.

The instructions further cause the second device to calculate the first pilot key based on a shared key, and the shared key is shared between the second device and the first network device.

The first network device includes at least one of an application function (AF) or a network function (NF), and the NF includes at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

The first device includes one of a terminal and a second network device; and the second device is a zero-power consumption terminal.

In embodiments of the present application, a first network device is provided. The first network device includes a processor, and a memory in communication with the processor. The memory is configured to store instructions. The instructions, when executed by the processor, cause the first network device to perform steps.

The instructions further cause the first network device to: transmit a first pilot key to a first device, where the first pilot key is used for the first device to calculate a channel estimation value and transmit multiple response signals to a second device based on the channel estimation value, and the multiple response signals are used for the second device to generate a second key.

The instructions further cause the first network device to calculate the first pilot key based on a shared key, where the shared key is shared between the first network device and the second device.

The instructions further cause the first network device to transmit first quantization information to the first device, where the first quantization information is used to determine a candidate parameter value corresponding to each candidate quantization sequence of multiple candidate quantization sequences.

The instructions further cause the first network device to receive a first key transmitted by the first device.

The instructions further cause the first network device to: transmit a pilot key update message, and receive a pilot key update response message, and the pilot key update response message is used to indicate that the second device has obtained a second pilot key.

The pilot key update message carries a second random number; the instructions further cause the first network device to: calculate the second pilot key based on a third key and a second parameter, where the second parameter includes at least one of the second random number, a length of the second random number, an identifier of the second device, a length of the identifier of the second device, a serial number, a length of the serial number, or a first specified value; and the third key includes one of the first key and the first pilot key.

The first network device includes at least one of an application function (AF) or a network function (NF), and the NF includes at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element. The first device includes one of a terminal and a second network device. The second device is a zero-power consumption terminal.

FIG. 23 is a schematic diagram showing a structure of a chip 2300 according to an embodiment of the present application. The chip 2300 includes a processor 2310. The processor 2310 can call a computer program from a memory and run the computer program to implement the method in the embodiments of the present application.

In one possible implementation, the chip 2300 may further include a memory 2320. The processor 2310 can call a computer program from the memory 2320 and run the computer program to implement the method performed by the access network device or the first core network device in the embodiments of the present application. The memory 2320 may be a separate device independent of the processor 2310 or may be integrated into the processor 2310.

In one possible implementation, the chip 2300 may further include an input interface 2330. The processor 2310 may control the input interface 2330 to communicate with other devices or chips. Specifically, it may obtain information or data transmitted by other devices or chips. In one possible implementation, the chip 2300 may further include an output interface 2340. The processor 2310 may control the output interface 2340 to communicate with other devices or chips. Specifically, it may output information or data to other devices or chips.

In one possible implementation, the chip can be applied to the first device or the target second device in the embodiments of the present application, and the chip can implement the corresponding processes implemented by the first device or the target second device in each method of the embodiments of the present application. For the sake of brevity, they will not be repeated here.

It should be understood that the chip mentioned in the embodiments of the present application can also be called a system-level chip, a system chip, a chip system or a system-on-chip chip, etc.

The processor mentioned above can be a general-purpose processor, a digital signal processor (DSP), a field programmable gate array (FPGA), an application specific integrated circuit (ASIC), or other programmable logic devices, transistor logic devices, discrete hardware components, etc.

The above memory may be a volatile memory or a nonvolatile memory, or may include both volatile and nonvolatile memories.

The memories in the embodiments of the present application are intended to include, but are not limited to, these and any other suitable types of memories.

FIG. 24 is a schematic block diagram of a communication system 1300 according to an embodiment of the present application. The communication system 1300 includes a first device 2410, a second device 2420, and a first network device 2430. The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium.

It can be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the system, the apparatus and the unit described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A key generation method, comprising:

    receiving, by a first device, a first pilot signal transmitted by a second device;
    calculating, by the first device, a channel estimation value based on a first pilot key and the first pilot signal;
    generating, by the first device, a first key based on multiple first quantization sequences; and
    transmitting, by the first device, multiple response signals to the second device based on the channel estimation value and the multiple first quantization sequences, wherein the multiple response signals are used for the second device to generate a second key.

2. The method according to claim 1, wherein transmitting, by the first device, the multiple response signals to the second device based on the channel estimation value and the multiple first quantization sequences, comprises:

    determining, by the first device, multiple groups of parameter values based on the multiple first quantization sequences;
    determining, by the first device, multiple groups of transmission parameters based on the channel estimation value and the multiple groups of parameter values; and
    transmitting, by the first device, the multiple response signals to the second device based on the multiple groups of transmission parameters.

3. The method according to claim 2, wherein determining, by the first device, the multiple groups of parameter values based on the multiple first quantization sequences, comprises:
determining, by the first device, an i-th group of parameter values based on first quantization information and an i-th initial quantization sequence of each type of one or more types corresponding to an i-th first quantization sequence, wherein the first quantization information is used to determine a candidate parameter value corresponding to each candidate quantization sequence of multiple candidate quantization sequences, the one or more types comprise at least one of a phase type, an amplitude type or a received signal strength indicator (RSSI) type, the i-th first quantization sequence is one of the multiple first quantization sequences, the i-th group of parameter values is one of the multiple groups of parameter values, and i is an integer.

4. The method according to claim 3, further comprising:
generating, by the first device, the i-th first quantization sequence based on the i-th initial quantization sequence of each type corresponding to the i-th first quantization sequence.

5. The method according to claim 3 or 4, wherein determining, by the first device, the i-th group of parameter values based on the first quantization information and the i-th initial quantization sequence of each type of the one or more types corresponding to the i-th first quantization sequence, comprises at least one of:

   in a case where the i-th initial quantization sequence of each type of the one or more types corresponding to the i-th first quantization sequence comprises an i-th initial quantization sequence of the amplitude type, determining, by the first device, an i-th amplitude value in the i-th group of parameter values based on the i-th initial quantization sequence of the amplitude type and first amplitude quantization information;

   in a case where the i-th initial quantization sequence of each type of the one or more types corresponding to the i-th first quantization sequence comprises an i-th initial quantization sequence of the phase type, determining, by the first device, an i-th phase value in the i-th group of parameter values based on the i-th initial quantization sequence of the phase type and first phase quantization information; or

   in a case where the i-th initial quantization sequence of each type of the one or more types corresponding to the i-th first quantization sequence comprises an i-th initial quantization sequence of the RSSI type, determining, by the first device, an i-th RSSI value in the i-th group of parameter values based on the i-th initial quantization sequence of the RSSI type and first RSSI quantization information.

6. The method according to claim 5, wherein determining, by the first device, the multiple groups of transmission parameters based on the channel estimation value and the multiple groups of parameter values, comprises at least one of:

   in a case where the i-th group of parameter values comprises the i-th amplitude value, calculating, by the first device, an i-th transmitted power in an i-th group of transmission parameters based on a channel estimation amplitude value and the i-th amplitude value, wherein the i-th group of transmission parameters is one of the multiple groups of transmission parameters;

   in a case where the i-th group of parameter values comprises the i-th phase value, calculating, by the first device, an i-th transmission phase in the i-th group of transmission parameters based on a channel estimation phase value and the i-th phase value; or

   in a case where the i-th group of parameter values comprises the i-th RSSI value, calculating, by the first device, an i-th transmitted power in the i-th group of transmission parameters based on a channel estimation amplitude value and the i-th RSSI value.

7. The method according to claim 5, wherein determining, by the first device, the multiple groups of transmission parameters based on the channel estimation value and the multiple groups of parameter values, comprises:

   calculating, by the first device, a radio frequency coefficient based on the channel estimation value; and

   determining, by the first device, the multiple groups of transmission parameters based on the multiple groups of parameter values and the radio frequency coefficient.

8. The method according to claim 7, wherein determining, by the first device, the multiple groups of transmission parameters based on the multiple groups of parameter values and the radio frequency coefficient, comprises:

   determining, by the first device, an i-th group of transmission parameters based on the i-th group of parameter values and the radio frequency coefficient, wherein the i-th group of transmission parameters is one of the multiple groups of transmission parameters.

9. The method according to any one of claims 2 to 8, wherein transmitting, by the first device, the multiple response signals to the second device based on the multiple groups of transmission parameters, comprises:

   transmitting, by the first device, an i-th response signal to the second device based on an i-th group of transmission parameters, wherein the i-th response signal is one of the multiple response signals, and different response signals of the multiple response signals occupy different time domain ranges.

10. The method according to any one of claims 1 to 9, wherein each response signal of the multiple response signals is a second pilot signal, and the second pilot signal is calculated based on the first pilot key.

11. The method according to claim 7, wherein determining, by the first device, the multiple groups of transmission parameters based on the multiple groups of parameter values and the radio frequency coefficient, comprises:

calculating, by the first device, multiple radio frequency sub-coefficients based on the radio frequency coefficient, wherein the first device has multiple antennas, and different radio frequency sub-coefficients of the multiple radio frequency sub-coefficients correspond to different antennas of the first device; and

determining, by the first device, multiple groups of transmission parameters corresponding to each group of response signals of multiple groups of response signals based on the multiple groups of parameter values and the multiple radio frequency sub-coefficients, wherein each group of response signals comprises one or more response signals, different groups of response signals occupy different time domain ranges, and different response signals of the one or more response signals correspond to different antennas.

12. The method according to claim 11, wherein determining, by the first device, the multiple groups of transmission parameters corresponding to each group of response signals of the multiple groups of response signals based on the multiple groups of parameter values and the multiple radio frequency sub-coefficients, comprises:
determining, by the first device, a j-th group of transmission parameters corresponding to a j-th group of response signals based on multiple groups of parameter values corresponding to the j-th group of response signals and a radio frequency sub-coefficient corresponding to each response signal in the j-th group of response signals, wherein the j-th group of response signals is one of the multiple groups of response signals and j is an integer.

13. The method according to claim 11 or 12, wherein transmitting, by the first device, the multiple response signals to the second device based on the multiple groups of transmission parameters, comprises:
transmitting, by the first device, the j-th group of response signals to the second device based on the j-th group of transmission parameters corresponding to the j-th group of response signals.

14. The method according to claim 13, wherein different response signals in the j-th group of response signals are different third pilot signals.

15. The method according to any one of claims 1 to 14, wherein calculating, by the first device, the channel estimation value based on the first pilot key and the first pilot signal, comprises:

calculating, by the first device, a fourth pilot signal based on the first pilot key; and calculating, by the first device, the channel estimation value based on the fourth pilot signal and the first pilot signal.

16. The method according to claim 15, wherein calculating, by the first device, the fourth pilot signal based on the first pilot key, comprises:
calculating, by the first device, the fourth pilot signal based on the first pilot key and a first parameter, wherein the first parameter comprises at least one of a first random number, a length of the first random number, a first timestamp, an identifier of the second device, a length of the identifier of the second device, or a first count value.

17. The method according to any one of claims 1 to 16, further comprising:

receiving, by the first device, a key confirmation request message from the second device, wherein the key confirmation request message carries a first verification code, and the first verification code is calculated by the second device based on the second key; and
verifying, by the first device, key consistency based on the first key and the first verification code.

18. The method according to claim 17, wherein verifying, by the first device, the key consistency based on the first key and the first verification code, comprises:

calculating, by the first device, a second verification code based on the first key; and
verifying, by the first device, the key consistency based on the second verification code and the first verification code.

19. The method according to claim 18, wherein the key confirmation request message further carries ciphertext data; and calculating, by the first device, the second verification code based on the first key comprises:
calculating, by the first device, the second verification code and plaintext data based on the first key, the ciphertext data and the first verification code.

20. The method according to any one of claims 1 to 19, further comprising:

transmitting, by the first device, a pilot key update message to the second device; and
receiving, by the first device, a pilot key update response message from the second device, wherein the pilot key update response message is used to indicate that the second device has obtained a second pilot key.

21. The method according to claim 20, wherein the pilot key update message carries a second random number; and the method further comprises:
calculating, by the first device, the second pilot key based on a third key and a second parameter, wherein the second parameter comprises at least one of the second random number, a length of the second random number, an identifier of the second device, a length of the identifier of the second device, a serial number, a length of the serial number or a first specified value; and the third key comprises one of the first key and the first pilot key.

22. The method according to any one of claims 3 to 14, wherein the first quantization information is predefined, or indicated by a first network device.

23. The method according to claim 22, wherein the method further comprises:
receiving, by the first device, the first quantization information from the first network device.

24. The method according to claims 1 to 21, wherein the first pilot key is shared between the first device and the second device.

25. The method according to claims 1 to 23, further comprising:
receiving, by the first device, the first pilot key from a first network device, wherein the first pilot key is calculated by the first network device based on a shared key, and the shared key is shared between the second device and the first network device.

26. The method according to claim 25, further comprising:
transmitting, by the first device, the first key to the first network device.

27. The method according to any one of claims 22, 23, 25 and 26, wherein the first network device comprises at least one of an application function (AF) or a network function (NF), and the NF comprises at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

28. The method according to any one of claims 1 to 27, wherein the first device comprises one of a terminal and a second network device; and the second device is a zero-power consumption terminal.

29. A key generation method, comprising:
calculating, by a second device, a first pilot signal based on a first pilot key;
transmitting, by the second device, the first pilot signal to a first device;
receiving, by the second device, multiple response signals from the first device; and
generating, by the second device, a second key based on the multiple response signals.

30. The method according to claim 29, wherein generating, by the second device, the second key based on the multiple response signals, comprises:
determining, by the second device, multiple second quantization sequences based on reception parameters of each response signal of the multiple response signals; and
generating, by the second device, the second key based on the multiple second quantization sequences.

31. The method according to claim 30, wherein determining, by the second device, the multiple second quantization sequences based on the reception parameters of each response signal of the multiple response signals, comprises:
determining, by the second device, an i-th received quantization sequence of each type of one or more types based on reception parameters of an i-th response signal and second quantization information, wherein the one or more types comprise at least one of a phase type, an amplitude type, or a received signal strength indicator (RSSI) type; the second quantization information is used to determine a candidate parameter value corresponding to each candidate quantization sequence of multiple candidate quantization sequences, and a parameter range corresponding to each candidate parameter value of multiple candidate parameter values; and the i-th response signal is one of the multiple response signals, and i is an integer; and
generating, by the second device, an i-th second quantization sequence based on the i-th received quantization sequence of each type, wherein the i-th second quantization sequence is one of the multiple second quantization sequences.

32. The method according to claim 31, wherein the reception parameters of the i-th response signal comprise at least one of a received amplitude of the i-th response signal, a received phase of the i-th response signal, or an RSSI of the i-th response signal.

33. The method according to claim 32, wherein determining, by the second device, the i-th received quantization sequence of each type of the one or more types based on the reception parameters of the i-th response signal and the second quantization information, comprises at least one of:

> determining, by the second device, an i-th received quantization sequence of the amplitude type based on the received amplitude of the i-th response signal and second amplitude quantization information;
> determining, by the second device, an i-th received quantization sequence of the phase type based on the received phase of the i-th response signal and second phase quantization information; or
> determining, by the second device, an i-th received quantization sequence of the RSSI type based on the RSSI of the i-th response signal and second RSSI quantization information.

34. The method according to any one of claims 29 to 33, wherein different response signals of the multiple response signals occupy different time domain ranges, each response signal of the multiple response signals is a second pilot signal, and the second pilot signal is calculated based on the first pilot key.

35. The method according to any one of claims 29 to 33, wherein receiving, by the second device, the multiple response signals from the first device, comprises:
receiving, by the second device, multiple groups of response signals from the first device, wherein each group of response signals of the multiple groups of response signals comprises one or more response signals, and different groups of response signals occupy different time domain ranges.

36. The method according to claim 35, wherein different response signals in each group of response signals are different third pilot signals.

37. The method according to any one of claims 29 to 36, wherein calculating, by the second device, the first pilot signal based on the first pilot key, comprises:
calculating, by the second device, the first pilot signal based on the first pilot key and a first parameter, wherein the first parameter comprises at least one of a first random number, a length of the first random number, a first timestamp, an identifier of the second device, a length of the identifier of the second device, or a first count value.

38. The method according to any one of claims 29 to 37, further comprising:

> calculating, by the second device, a first verification code based on the second key;
> transmitting, by the second device, a key confirmation request message to the first device, wherein the key confirmation request message carries the first verification code, and the first verification code is used for the first device to verify key consistency.

39. The method according to claim 38, wherein the key confirmation request message further carries ciphertext data; and calculating, by the second device, the first verification code based on the second key, comprises:
calculating, by the second device, the first verification code and the ciphertext data based on the second key and plaintext data.

40. The method according to any one of claims 29 to 39, further comprising:

> receiving, by the second device, a pilot key update message;
> calculating, by the second device, a second pilot key; and
> transmitting, by the second device, a pilot key update response message, wherein the pilot key update response message is used to indicate that the second device has obtained the second pilot key.

41. The method according to claim 40, wherein the pilot key update message carries a second random number; and calculating, by the second device, the second pilot key, comprises:
calculating, by the second device, the second pilot key based on a fourth key and a second parameter, wherein the second parameter comprises at least one of the second random number, a length of the second random number, an identifier of the second device, a length of the identifier of the second device, a serial number, a length of the serial number, or a first specified value; and the fourth key comprises one of the second key and the first pilot key.

42. The method according to any one of claims 31 to 33, wherein the second quantization information is predefined.

43. The method according to any one of claims 29 to 42, wherein the first pilot key is shared between the first device and the second device.

44. The method according to any one of claims 29 to 42, further comprising:

calculating, by the second device, the first pilot key based on a shared key, wherein the shared key is shared between the second device and a first network device.

45. The method according to claim 44, wherein the first network device comprises at least one of an application function (AF) or a network function (NF), and the NF comprises at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

46. The method according to any one of claims 29 to 45, wherein the first device comprises one of a terminal and a second network device; and the second device is a zero-power consumption terminal.

47. A key generation method, comprising:
transmitting, by a first network device, a first pilot key to a first device, wherein the first pilot key is used for the first device to calculate a channel estimation value and transmit multiple response signals to a second device based on the channel estimation value, and the multiple response signals are used for the second device to generate a second key.

48. The method according to claim 47, further comprising:
calculating, by the first network device, the first pilot key based on a shared key, wherein the shared key is shared between the first network device and the second device.

49. The method according to claim 47 or 48, further comprising:
transmitting, by the first network device, first quantization information to the first device, wherein the first quantization information is used to determine a candidate parameter value corresponding to each candidate quantization sequence of multiple candidate quantization sequences.

50. The method according to any one of claims 47 to 49, further comprising:
receiving, by the first network device, a first key transmitted by the first device.

51. The method according to claim 50, further comprising:

transmitting, by the first network device, a pilot key update message;
receiving, by the first network device, a pilot key update response message, wherein the pilot key update response message is used to indicate that the second device has obtained a second pilot key.

52. The method according to claim 51, wherein the pilot key update message carries a second random number; and the method further comprises:
calculating, by the first network device, the second pilot key based on a third key and a second parameter, wherein the second parameter comprises at least one of the second random number, a length of the second random number, an identifier of the second device, a length of the identifier of the second device, a serial number, a length of the serial number, or a first specified value; and the third key comprises one of the first key and the first pilot key.

53. The method according to any one of claims 47 to 52, wherein the first network device comprises at least one of an application function (AF) or a network function (NF), and the NF comprises at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element;

the first device comprises one of a terminal and a second network device; and
the second device is a zero-power consumption terminal.

54. A first device, comprising:

a first communication unit configured to receive a first pilot signal transmitted by a second device, and transmit multiple response signals to the second device based on a channel estimation value and multiple first quantization sequences, wherein the multiple response signals are used for the second device to generate a second key; and
a first processing unit configured to calculate the channel estimation value based on a first pilot key and the first pilot signal, and generate a first key based on the multiple first quantization sequences.

55. The first device according to claim 54, wherein the first processing unit is configured to determine multiple groups of parameter values based on the multiple first quantization sequences, and determine multiple groups of transmission parameters based on the channel estimation value and the multiple groups of parameter values; and
the first communication unit is configured to transmit the multiple response signals to the second device based on the multiple groups of transmission parameters.

56. The first device according to claim 55, wherein the first processing unit is configured to determine an i-th group of parameter values based on first quantization information and an i-th initial quantization sequence of each type of one or more types corresponding to an i-th first quantization sequence, wherein the first quantization information is used to determine a candidate parameter value corresponding to each candidate quantization sequence of multiple candidate quantization sequences, the one or more types comprise at least one of a phase type, an amplitude type or a received signal strength indicator (RSSI) type, the i-th first quantization sequence is one of the multiple first quantization sequences, the i-th group of parameter values is one of the multiple groups of parameter values, and i is an integer.

57. The first device according to claim 56, wherein the first processing unit is configured to generate the i-th first quantization sequence based on the i-th initial quantization sequence of each type corresponding to the i-th first quantization sequence.

58. The first device according to claim 56 or 57, wherein the first processing unit is configured to perform at least one of: in a case where the i-th initial quantization sequence of each type of the one or more types corresponding to the i-th first quantization sequence comprises an i-th initial quantization sequence of the amplitude type, determining an i-th amplitude value in the i-th group of parameter values based on the i-th initial quantization sequence of the amplitude type and first amplitude quantization information; in a case where the i-th initial quantization sequence of each type of the one or more types corresponding to the i-th first quantization sequence comprises an i-th initial quantization sequence of the phase type, determining an i-th phase value in the i-th group of parameter values based on the i-th initial quantization sequence of the phase type and first phase quantization information; or in a case where the i-th initial quantization sequence of each type of the one or more types corresponding to the i-th first quantization sequence comprises an i-th initial quantization sequence of the RSSI type, determining an i-th RSSI value in the i-th group of parameter values based on the i-th initial quantization sequence of the RSSI type and first RSSI quantization information.

59. The first device according to claim 58, wherein the first processing unit is configured to perform at least one of: in a case where the i-th group of parameter values comprises the i-th amplitude value, calculating an i-th transmitted power in an i-th group of transmission parameters based on a channel estimation amplitude value and the i-th amplitude value, wherein the i-th group of transmission parameters is one of the multiple groups of transmission parameters; in a case where the i-th group of parameter values comprises the i-th phase value, calculating an i-th transmission phase in the i-th group of transmission parameters based on a channel estimation phase value and the i-th phase value; or in a case where the i-th group of parameter values comprises the i-th RSSI value, calculating an i-th transmitted power in the i-th group of transmission parameters based on a channel estimation amplitude value and the i-th RSSI value.

60. The first device according to claim 58, wherein the first processing unit is configured to calculate a radio frequency coefficient based on the channel estimation value, and determine the multiple groups of transmission parameters based on the multiple groups of parameter values and the radio frequency coefficient.

61. The first device according to claim 60, wherein the first processing unit is configured to determine an i-th group of transmission parameters based on the i-th group of parameter values and the radio frequency coefficient, and the i-th group of transmission parameters is one of the multiple groups of transmission parameters.

62. The first device according to any one of claims 55 to 61, wherein the first communication unit is configured to transmit an i-th response signal to the second device based on an i-th group of transmission parameters, wherein the i-th response signal is one of the multiple response signals, and different response signals of the multiple response signals occupy different time domain ranges.

63. The first device according to any one of claims 54 to 62, wherein each response signal of the multiple response signals is a second pilot signal, and the second pilot signal is calculated based on the first pilot key.

64. The first device according to claim 60, wherein the first processing unit is configured to calculate multiple radio frequency sub-coefficients based on the radio frequency coefficient, wherein the first device has multiple antennas, and different radio frequency sub-coefficients of the multiple radio frequency sub-coefficients correspond to different antennas of the first device; and the first processing unit is configured to determine multiple groups of transmission parameters corresponding to each group of response signals of multiple groups of response signals based on the multiple groups of parameter values and the multiple radio frequency sub-coefficients, wherein each group of response signals comprises one or more response signals, different groups of response signals occupy different time domain ranges, and different response signals of the one or more response signals correspond to different antennas.

65. The first device according to claim 64, wherein the first processing unit is configured to determine a j-th group of transmission parameters corresponding to a j-th group of response signals based on multiple groups of parameter values corresponding to the j-th group of response signals and a radio frequency sub-coefficient corresponding to each response signal in the j-th group of response signals, wherein the j-th group of response signals is one of the multiple groups of response signals and j is an integer.

66. The first device according to claim 64 or 65, wherein the first communication unit is configured to transmit the j-th group of response signals to the second device based on the j-th group of transmission parameters corresponding to the j-th group of response signals.

67. The first device according to claim 66, wherein different response signals in the j-th group of response signals are different third pilot signals.

68. The first device according to any one of claims 54 to 67, wherein the first processing unit is configured to calculate a fourth pilot signal based on the first pilot key, and calculate the channel estimation value based on the fourth pilot signal and the first pilot signal.

69. The first device according to claim 68, wherein the first processing unit is configured to calculate the fourth pilot signal based on the first pilot key and a first parameter, wherein the first parameter comprises at least one of a first random number, a length of the first random number, a first timestamp, an identifier of the second device, a length of the identifier of the second device, or a first count value.

70. The first device according to any one of claims 54 to 69, wherein the first communication unit is configured to receive a key confirmation request message from the second device, wherein the key confirmation request message carries a first verification code, and the first verification code is calculated by the second device based on the second key; and the first communication unit is configured to verify key consistency based on the first key and the first verification code.

71. The first device according to claim 70, wherein the first processing unit is configured to calculate a second verification code based on the first key; and verify the key consistency based on the second verification code and the first verification code.

72. The first device according to claim 71, wherein the key confirmation request message further carries ciphertext data; and the first processing unit is configured to calculate the second verification code and plaintext data based on the first key, the ciphertext data and the first verification code.

73. The first device according to any one of claims 54 to 72, wherein the first communication unit is configured to transmit a pilot key update message to the second device; and receive a pilot key update response message from the second device, wherein the pilot key update response message is used to indicate that the second device has obtained a second pilot key.

74. The first device according to claim 73, wherein the pilot key update message carries a second random number; and the first processing unit is configured to calculate the second pilot key based on a third key and a second parameter, wherein the second parameter comprises at least one of the second random number, a length of the second random number, an identifier of the second device, a length of the identifier of the second device, a serial number, a length of the serial number or a first specified value; and the third key comprises one of the first key and the first pilot key.

75. The first device according to any one of claims 56 to 67, wherein the first quantization information is predefined, or indicated by a first network device.

76. The first device according to claim 22, wherein the first communication unit is configured to receive the first quantization information from the first network device.

77. The first device according to claims 54 to 74, wherein the first pilot key is shared between the first device and the second device.

78. The first device according to claims 54 to 76, wherein the first communication unit is configured to receive the first pilot key from a first network device, wherein the first pilot key is calculated by the first network device based on a shared key, and the shared key is shared between the second device and the first network device.

79. The first device according to claim 78, wherein the first communication unit is configured to transmit the first key to the first network device.

**80.** The first device according to any one of claims 75, 76, 78, and 79, wherein the first network device comprises at least one of an application function (AF) or a network function (NF), and the NF comprises at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

**81.** The first device according to any one of claims 54 to 80, wherein the first device comprises one of a terminal and a second network device; and the second device is a zero-power consumption terminal.

**82.** A second device, comprising:

a second processing unit configured to calculate a first pilot signal based on a first pilot key, and generate a second key based on multiple response signals; and
a second communication unit configured to transmit the first pilot signal to a first device, and receive the multiple response signals from the first device.

**83.** The second device according to claim 82, wherein the second processing unit is configured to determine multiple second quantization sequences based on reception parameters of each response signal of the multiple response signals, and generate the second key based on the multiple second quantization sequences.

**84.** The second device according to claim 83, wherein the second processing unit is configured to determine an i-th received quantization sequence of each type of one or more types based on reception parameters of an i-th response signal and second quantization information, wherein the one or more types comprise at least one of a phase type, an amplitude type, or a received signal strength indicator (RSSI) type; the second quantization information is used to determine a candidate parameter value corresponding to each candidate quantization sequence of multiple candidate quantization sequences, and a parameter range corresponding to each candidate parameter value of multiple candidate parameter values; and the i-th response signal is one of the multiple response signals, and i is an integer; and the second processing unit is configured to generate an i-th second quantization sequence based on the i-th received quantization sequence of each type, wherein the i-th second quantization sequence is one of the multiple second quantization sequences.

**85.** The second device according to claim 84, wherein the reception parameters of the i-th response signal comprise at least one of a received amplitude of the i-th response signal, a received phase of the i-th response signal, or an RSSI of the i-th response signal.

**86.** The second device according to claim 85, wherein the second processing unit is configured to perform at least one of: determining an i-th received quantization sequence of the amplitude type based on the received amplitude of the i-th response signal and second amplitude quantization information; determining an i-th received quantization sequence of the phase type based on the received phase of the i-th response signal and second phase quantization information; or determining an i-th received quantization sequence of the RSSI type based on the RSSI of the i-th response signal and second RSSI quantization information.

**87.** The second device according to any one of claims 82 to 86, wherein different response signals of the multiple response signals occupy different time domain ranges, each response signal of the multiple response signals is a second pilot signal, and the second pilot signal is calculated based on the first pilot key.

**88.** The second device according to any one of claims 82 to 86, wherein the second communication unit is configured to receive multiple groups of response signals from the first device, wherein each group of response signals of the multiple groups of response signals comprises one or more response signals, and different groups of response signals occupy different time domain ranges.

**89.** The second device according to claim 88, wherein different response signals in each group of response signals are different third pilot signals.

**90.** The second device according to any one of claims 82 to 89, wherein the second processing unit is configured to calculate the first pilot signal based on the first pilot key and a first parameter, wherein the first parameter comprises at least one of a first random number, a length of the first random number, a first timestamp, an identifier of the second device, a length of the identifier of the second device, or a first count value.

**91.** The second device according to any one of claims 82 to 90, wherein the second processing unit is configured to calculate a first verification code based on the second key; and
the second communication unit is configured to transmit a key confirmation request message to the first device, wherein the key confirmation request message carries the first verification code, and the first verification code is used for the first device to verify key consistency.

92. The second device according to claim 91, wherein the key confirmation request message further carries ciphertext data; and the second processing unit is configured to calculate the first verification code and the ciphertext data based on the second key and plaintext data.

93. The second device according to any one of claims 82 to 92, wherein the second communication unit is configured to receive a pilot key update message, and transmit a pilot key update response message, wherein the pilot key update response message is used to indicate that the second device has obtained a second pilot key; and
the second processing unit is configured to calculate the second pilot key.

94. The second device according to claim 93, wherein the pilot key update message carries a second random number; and the second processing unit is configured to calculate the second pilot key based on a fourth key and a second parameter, wherein the second parameter comprises at least one of the second random number, a length of the second random number, an identifier of the second device, a length of the identifier of the second device, a serial number, a length of the serial number, or a first specified value; and the fourth key comprises one of the second key and the first pilot key.

95. The second device according to any one of claims 84 to 86, wherein the second quantization information is predefined.

96. The second device according to any one of claims 82 to 95, wherein the first pilot key is shared between the first device and the second device.

97. The second device according to any one of claims 82 to 95, wherein the second processing unit is configured to calculate the first pilot key based on a shared key, and the shared key is shared between the second device and a first network device.

98. The second device according to claim 97, wherein the first network device comprises at least one of an application function (AF) or a network function (NF), and the NF comprises at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element.

99. The second device according to any one of claims 82 to 98, wherein the first device comprises one of a terminal and a second network device; and the second device is a zero-power consumption terminal.

100.
A first network device, comprising:
a third communication unit configured to transmit a first pilot key to a first device, wherein the first pilot key is used for the first device to calculate a channel estimation value and transmit multiple response signals to a second device based on the channel estimation value, and the multiple response signals are used for the second device to generate a second key.

101.
The first network device according to claim 100, wherein the first network device further comprises a third processing unit; and
the third processing unit is configured to calculate the first pilot key based on a shared key, wherein the shared key is shared between the first network device and the second device.

102.
The first network device according to claim 100 or 101, wherein the third communication unit is configured to transmit first quantization information to the first device, wherein the first quantization information is used to determine a candidate parameter value corresponding to each candidate quantization sequence of multiple candidate quantization sequences.

103.
The first network device according to any one of claims 100 to 102, wherein the third communication unit is configured to receive a first key transmitted by the first device.

104.
The first network device according to claim 103, wherein the third communication unit is configured to transmit a pilot key update message, and receive a pilot key update response message, and the pilot key update response message is used to indicate that the second device has obtained a second pilot key.

105.
The first network device according to claim 104, wherein the pilot key update message carries a second random number; and the third processing unit is configured to calculate the second pilot key based on a third key and a second parameter, wherein the second parameter comprises at least one of the second random number, a length of the second random number, an identifier of the second device, a length of the identifier of the second device, a serial number, a length of the serial number, or a first specified value; and the third key comprises one of the first key and the first pilot key.

**106.**
The first network device according to any one of claims 100 to 105, wherein the first network device comprises at least one of an application function (AF) or a network function (NF), and the NF comprises at least one of an access and mobility management function (AMF), an authentication server function (AUSF), a home public land mobile network (HPLMN) security endpoint (HSE), a unified data management function (UDM), a unified data repository (UDR), a security anchor function (SEAF), or a core network dedicated network element;

> the first device comprises one of a terminal and a second network device; and
> the second device is a zero-power consumption terminal.

**107.**
A first device comprising a processor and a memory in communication with the processor, wherein the memory is configured to store instructions, and the instructions, when executed by the processor, cause the first device to perform the method according to any one of claims 1 to 28.

**108.**
A second device comprising a processor and a memory in communication with the processor, wherein the memory is configured to store instructions, and the instructions, when executed by the processor, cause the second device to perform the method according to any one of claims 29 to 46.

**109.**
A first network device comprising a processor and a memory in communication with the processor, wherein the memory is configured to store instructions, and the instructions, when executed by the processor, cause the first network device to perform the method according to any one of claims 47 to 53.

**110.**
A chip comprising a processor configured to call a computer program from a memory and run the computer program to cause a device equipped with the chip to perform the method according to any one of claims 1 to 28, any one of claims 29 to 46, or any one of claims 47 to 53.

**111.** A computer-readable storage medium configured to store a computer program, wherein the computer program, when executed by a device, causes the device to perform the method according to any one of claims 1 to 28, any one of claims 29 to 46, or any one of claims 47 to 53.

**112.**
A computer program product comprising computer program instructions, wherein the computer program instructions cause a computer to perform the method according to any one of claims 1 to 28, any one of claims 29 to 46, or any one of claims 47 to 53.

**113.**
A computer program, wherein the computer program causes a computer to perform the method according to any one of claims 1 to 28, any one of claims 29 to 46, or any one of claims 47 to 53.

FIG. 1

| A first device receives a first pilot signal transmitted by a second device | S210 |
|---|---|

| The first device calculates a channel estimation value based on a first pilot key and the first pilot signal | S220 |

| The first device generates a first key based on multiple first quantization sequences | S230 |

| The first device transmits multiple response signals to the second device based on the channel estimation value and the multiple first quantization sequences, where the multiple response signals are used for the second device to generate a second key | S240 |

FIG. 2

| A second device calculates a first pilot signal based on a first pilot key | S310 |
|---|---|

| The second device transmits the first pilot signal to a first device | S320 |

| The second device receives multiple response signals from the first device | S330 |

| The second device generates a second key based on the multiple response signals | S340 |

FIG. 3

| A first network device transmits a first pilot key to a first device, where the first pilot key is used for the first device to calculate a channel estimation value and transmit multiple response signals to a second device based on the channel estimation value, and the multiple response signals are used for the second device to generate a second key | S410 |
|---|---|

FIG. 4

Reader    $h_{R,T}$    Tag

$h_{T,R}$

$h_{R,E}$    $h_{T,E}$

Eavesdropper

FIG. 5

| Reader | Tag |
|---|---|
| 600. Preconfigured with K and a quantization scheme | 600. Preconfigured with K and a quantization scheme |

601. Key generation request

602. Private pilot signal

603: Obtain a channel estimation value between the tag and the reader

604: Select M quantization sequences and concatenates them into a pairwise key Ks for the two parties

605: Calculate transmitted powers required for M response signals

606. Transmit a first response signal

...

606. Transmit an M-th response signal

607. The tag measures amplitudes of the received M response signals and generates a pairwise key Ks' using the configured amplitude quantization scheme

609. Key consistency verification

No → Verification fails

Yes

608. Key confirmation request message

610. Key confirmation response

FIG. 6

FIG. 7

FIG. 8

FIG. 9

FIG. 10

**Reader**

1100. Preconfigured with K and a quantization scheme

**Tag**

1100. Preconfigured with K and a quantization scheme

1101. Key generation request

1102. Transmit one private pilot signal of length L to the reader using a single antenna

1103: Obtain a channel estimation value between the tag and the reader

1104: Select M quantization sequences and concatenates them into a pairwise key Ks for the two parties

1105: Construct a radio frequency coefficient corresponding to response signals transmitted to the tag

1106. Transmit a response signal

1107. Generate a pairwise key Ks' using the quantization scheme

1109. Key consistency verification

No

Verification fails

1108. Key confirmation request message

Yes

1110. Key confirmation response

FIG. 11

**A-IoT**

1200. Preconfigured with a root key K and a quantization scheme

**UE/base station**

**AF/NF**

1200. Preconfigured with a root key K and a quantization scheme

1202. Transmit the first pilot key and the quantization scheme

1201. Derive a first pilot key based on the root key K

1203. Key generation request

1204. Derive the first pilot key based on the root key K, and generate a private pilot based on the first pilot key

1205. Transmit the private pilot

1206. Perform channel estimation, select quantization sequences and concatenate them to form a pairwise key Ks, and calculate at least one of a transmit power, a transmit phase, or an antenna weight coefficient (i.e., radio frequency coefficient) of a downlink pilot signal

1207. Transmit a response signal

1208. Generate a pairwise key Ks' based on the quantization scheme

1209. Key confirmation request

1210. Key consistency verification

1211a. Key confirmation response

1211b. Transmit a pairwise key Ks

1212a. Update the private pilot key

1212b. Update the private pilot key

FIG. 12

FIG. 13

FIG. 14

FIG. 15

FIG. 16

FIG. 17

FIG. 18

FIG. 19

FIG. 20

FIG. 21

Communication device
2200

Memory
2220

Processor
2210

Transceiver
2230

FIG. 22

Chip 2300

Input
interface
2330

Processor
2310

Memory
2320

Output interface
2340

FIG. 23

Communication system 2400

First device 2410

Second device 2420

First network
device 2430

FIG. 24

## INTERNATIONAL SEARCH REPORT

| | International application No. |
|---|---|
| | **PCT/CN2023/105969** |

| A. | CLASSIFICATION OF SUBJECT MATTER |
|---|---|
| | H04L 9/08(2006.01)i |

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, ETSI, IETF, CJFD: 密钥, key, 导频, pilot, 信道, channel, 估计, estimat+, 状态, state, 量化, quantificat+, 零, 低, 功耗, power consumpt+, 序列, sequence

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114513779 A (CHINA UNIONPAY CO., LTD.) 17 May 2022 (2022-05-17) description, paragraphs 63-99 | 1-113 |
| Y | CN 114650530 A (HUAWEI TECHNOLOGIES CO., LTD.) 21 June 2022 (2022-06-21) claims 1-20 | 1-113 |
| A | CN 115913510 A (ELECTRIC POWER RESEARCH INSTITUTE, STATE GRID SHANXI ELECTRIC POWER CO. et al.) 04 April 2023 (2023-04-04) entire document | 1-113 |
| A | CN 116321137 A (XINGTANG COMMUNICATIONS TECHNOLOGY CO., LTD. et al.) 23 June 2023 (2023-06-23) entire document | 1-113 |
| A | US 2023179995 A1 (QUALCOMM INC.) 08 June 2023 (2023-06-08) entire document | 1-113 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 August 2023** | **10 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/105969** |

**C.      DOCUMENTS CONSIDERED TO BE RELEVANT**

| Category* | Citation of document, with indication, where appropriate, of the relevant passages | Relevant to claim No. |
| --- | --- | --- |
| A | 丁宁等 (DING, Ning et al.). "非完美信道估计条件下多比特量化无线密钥生成性能分析 (Performance Analysis of Wireless Key Generation with Multi-bit Quantization Under Imperfect Channel Estimation Condition)" 计算机应用 (Journal of Computer Applications), Vol. 40, No. 1, 10 January 2020 (2020-01-10), 143-147 ISSN: 1001-9081, entire document | 1-113 |

**INTERNATIONAL SEARCH REPORT**
Information on patent family members

International application No.

**PCT/CN2023/105969**

| Patent document cited in search report | | | Publication date (day/month/year) | Patent family member(s) | | | Publication date (day/month/year) |
|---|---|---|---|---|---|---|---|
| CN | 114513779 | A | 17 May 2022 | None | | | |
| CN | 114650530 | A | 21 June 2022 | WO | 2022127656 | A1 | 23 June 2022 |
| CN | 115913510 | A | 04 April 2023 | None | | | |
| CN | 116321137 | A | 23 June 2023 | None | | | |
| US | 2023179995 | A1 | 08 June 2023 | WO | 2023102282 | A1 | 08 June 2023 |

Form PCT/ISA/210 (patent family annex) (July 2022)